# EUROPEAN PATENT APPLICATION

(11) **EP 4 615 124 A1**
(43) Date of publication of application: **10.09.2025**
(21) Application number: 23884812.1
(22) Date of filing: 30.10.2023
(51) Int. Cl.: H04W 72/232

(54) **METHOD AND APPARATUS IN COMMUNICATION NODE USED FOR WIRELESS COMMUNICATION**

(30) Priority: 03.11.2022 CN 202211370744
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/127595
(87) International publication number: WO 2024/093881

(57) **Abstract**

Disclosed in the present application are a method and apparatus in a communication node used for wireless communication. The method comprises: a communication node triggers a first-type buffer status report; and after a behavior triggers a first-type buffer status report, sending a first MAC PDU, wherein the first MAC PDU comprises at least a first MAC CE; the first MAC CE indicates K1 pieces of data volume information; the K1 pieces of data volume information are respectively for K1 objects; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects. The solution of data volume information reporting based on temporal information provided in the present application can reduce the scheduling delay, and improve the scheduling performance.

## Description

### Technical Field

The present application relates to a transmission method and apparatus in a wireless communication system, in particular to a method and apparatus for large data volume especially high-speed and low-delay services.

### Background Art

Application scenarios of a wireless communication system in the future will become more and more diversified, and different application scenarios will put forward different performance requirements for the system. In order to meet different performance requirements of various application scenarios, at the 3GPP (3rd Generation Partner Project) RAN (Radio Access Network) #72 plenary meeting, it was decided to research a new radio (NR) technology. At the 3GPP RAN #75 plenary meeting, the WI (Work Item) of NR (New Radio) was passed to begin the standardization work on NR (New Radio). Therein, XR is one important research direction of R18 (Release 18).

### Summary of the Invention

In existing protocols, a buffer status reporting (BSR) process is used for providing data volume information, and the data volume information carried by one BSR MAC (Medium Access Control) CE (Control Element) is used for resource allocation. XR services comprise a VR (Virtual Reality) service, an AR (Augmented Reality) service, and an MR (Mixed Reality) service, which have the features of high speed and low latency; meanwhile, XR services are interactive services and have strict requirements on the response time of services. For example, a user's gesture information is transmitted to the server, and an image fed back by a server needs to be presented on the user's terminal in a very short time, otherwise the user will feel obvious delays, affecting user experience. XR services comprise various data, for example, videos, audios, and data for controlling various sensors. These pieces of information have a certain dependency relationship, and when a triggering condition is satisfied, a group of data packets with the dependency relationship will be discarded. The existing data buffer reporting mechanism cannot meet the needs of XR services, so the data buffer reporting mechanism needs to be enhanced.

In view of the above-mentioned problems, the present application provides a solution for data buffer reporting. In view of the description of the above-mentioned problems, an XR service is used as an example; the present application is also applicable to scenarios, for example, other high data rate services; and further, although the present application provides an implementation for XR, the present application can also be used for scenarios, for example, a LTE (Long-Term Evolution) scenario, so as to achieve similar technical effects to the NR. Further, although the original intention of the present application is directed at a Uu radio, the present application can also be used for a PC5 port. Further, although the original intention of the present application is directed at a terminal and base station scenario, the present application is also applicable to a V2X (Vehicle-to-Everything) scenario and communication scenarios between the terminal and a relay and between the relay and the base station, to achieve similar technical effects in the terminal and base station scenario. Further, although the original intention of the present application is directed at the terminal and base station scenario, the present application is also applicable to an IAB (Integrated Access and Backhaul) communication scenario, to achieve similar technical effects in the terminal and base station scenario. Further, although the original intention of the present application is directed at a terrestrial network scenario, the present application is also applicable to a non-terrestrial network (NTN) communication scenario, to achieve similar technical effects in the TN scenario. In addition, the use of a unified solution for different scenarios also facilitates the reduction of hardware complexity and costs.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

It should be explained that in the absence of conflicts, the embodiments in any node of the present application and the features in the embodiments can be applied to any other node. In the absence of conflicts, the embodiments of the present application and the features in the embodiments can be arbitrarily combined with each other.

The present application discloses a method used in a first node for wireless communication, comprising:
triggering one first-type buffer status report; After a behavior triggers a first-type buffer status report, a first MAC PDU (Protocol Data Unit) is sent, the first MAC PDU comprises at least a first MAC CE, the first MAC CE indicates K1 pieces of data volume information, and the K1 pieces of data volume information are respectively for K1 objects,
wherein the first data volume information is one of the K1 pieces of data volume information, the first object is one of the K1 objects, and the first data volume information is for the first object.

As one embodiment, the position of the first data volume information in the first MAC CE depends on temporal information of at least one of the K1 objects.

As one embodiment, the problem to be solved by the present application comprises: how to avoid a packet loss.

As one embodiment, the problem to be solved by the present application comprises: how to avoid a packet loss caused by scheduling delay.

As one embodiment, the problem to be solved by the present application comprises: how to determine each piece of data volume information in the first MAC CE.

As one embodiment, the problem to be solved by the present application comprises: how to determine the K1 pieces of data volume information included in the first MAC CE.

As one embodiment, a characteristic of the above-mentioned method comprises: determining each piece of data volume information in the first MAC CE according to temporal information.

As one embodiment, a characteristic of the above-mentioned method comprises: determining the K1 pieces of data volume information included in the first MAC CE according to temporal information.

As one embodiment, before the first MAC PDU is sent, a logical channel prioritization (LCP) process is executed; and the order of the first MAC CE in the logical channel prioritization process is not lower than the order of the MAC CE for regular BSR in the logical channel prioritization process.

As one embodiment, the problem to be solved by the present application comprises: how to avoid a packet loss.

As one embodiment, the problem to be solved by the present application comprises: how to avoid a packet loss caused by scheduling delay.

As one embodiment, a characteristic of the above-mentioned method comprises: the order of the first MAC CE in the logical channel prioritization process is the same as the order of the MAC CE for the regular BSR in the logical channel prioritization process.

As one embodiment, a characteristic of the above-mentioned method comprises: the order of the first MAC CE in the logical channel prioritization process has precedence over the order of the MAC CE for the regular BSR in the logical channel prioritization process.

As one embodiment, the benefit of the above-mentioned method comprises: the data volume information of the object with the largest temporal information is preferentially reported to avoid the packet loss caused by the scheduling delay.

As one embodiment, the benefit of the above-mentioned method comprises: the data volume information of the object with the smallest temporal information is preferentially reported to avoid the packet loss caused by the scheduling delay.

As one embodiment, the benefit of the above-mentioned method comprises: the first MAC CE is preferentially sent to shorten the scheduling delay.

As one embodiment, the benefit of the above-mentioned method comprises: the priority of the first MAC CE is increased.

As one embodiment, the benefit of the above-mentioned method comprises: the packet loss caused by the scheduling delay is avoided.

As one embodiment, the benefit of the above-mentioned method comprises: the scheduling delay is shortened.

As one embodiment, the benefit of the above-mentioned method comprises: UE service performance is improved.

According to one aspect of the present application, it is characterized by comprising:
receive first signaling, the first signaling indicating a first uplink grant,
wherein only when the first uplink grant cannot accommodate data volume information of K2 objects, the position of the first data volume information in the first MAC CE depends on the temporal information of the at least one of the K1 objects; the K2 objects have data available, any of the K1 objects belongs to the K2 objects, and K1 is less than K2; and the first MAC PDU is sent on the first uplink grant.

As one embodiment, a characteristic of the above-mentioned method comprises: only when the first uplink grant cannot accommodate the data volume information of K2 objects, the position of the first data volume information in the first MAC CE depends on the temporal information of at least one of the K1 objects.

As one embodiment, the benefit of the above-mentioned method comprises: when the first MAC CE is in a truncated format, the data volume information of the object with the largest temporal information is preferentially reported to avoid the packet loss caused by the scheduling delay.

As one embodiment, the benefit of the above-mentioned method comprises: when the first MAC CE is in a truncated format, the data volume information of the object with the smallest temporal information is preferentially reported to avoid the packet loss caused by the scheduling delay.

According to one aspect of the present application, it is characterized by comprising:
a second-type buffer status report is cancelled in response to the first MAC PDU being sent,
wherein the second-type buffer status report is triggered before the first MAC PDU is sent, and the second-type buffer status report comprises at least one of regular BSR, periodic BSR, or padding BSR.

As one embodiment, the problem to be solved by the present application comprises: if the MAC CE formats triggered by the first-type buffer status report and the second-type buffer status report are different, sending a plurality of MAC CEs will increase signaling overhead, how to avoid resource waste.

As one embodiment, the problem to be solved by the present application comprises: if the MAC CE formats triggered by the first-type buffer status report and the second-type buffer status report are different, sending a plurality of MAC CEs will increase the extended scheduling delay, how to shorten the scheduling delay.

As one embodiment, the problem to be solved by the present application comprises: how to avoid the first-type buffer status report triggering an SR or random access process.

As one embodiment, a characteristic of the above-mentioned method comprises: the first MAC PDU carrying the first MAC CE being sent is used for cancelling the second-type buffer status report.

As one embodiment, a characteristic of the above-mentioned method comprises: the first MAC PDU carrying the first MAC CE for the first-type buffer status report being sent is used for cancelling the second-type buffer status report.

As one embodiment, the benefit of the above-mentioned method comprises: triggering of the SR by the second-type buffer status report is avoided.

As one embodiment, the benefit of the above-mentioned method comprises: triggering of the random access process by the second-type buffer status report is avoided.

As one embodiment, the benefit of the above-mentioned method comprises: resource waste is avoided.

As one embodiment, the benefit of the above-mentioned method comprises: the scheduling delay is shortened.

According to one aspect of the present application, it is characterized in that the first MAC CE comprises a first bitmap, the first bitmap consists of K3 bits, and the K3 bits correspond to K3 objects, respectively; and K1 bits among the K3 bits are set as 1, and the K1 bits and the K1 objects are in one-to-one correspondence.

According to one aspect of the present application, it is characterized in that any bit in the first bitmap corresponds to one index in a first table, the first table comprises Q1 indexes and at most Q1 objects, and each of the at most Q1 objects corresponds to one of the Q1 index; and each of the at most Q1 objects is one piece of temporal information.

As one embodiment, the benefit of the above-mentioned method comprises: the data volume information is reported in a unit of temporal information, which is unbound from reporting the data volume information in a unit of LCG (Logical Channel Group) in the traditional BSR, thus facilitating a base station to perform resource scheduling according to the temporal information.

As one embodiment, the benefit of the above-mentioned method comprises: the scheduling performance is improved.

According to one aspect of the present application, it is characterized by comprising:
sending a second signaling set, the second signaling set comprising the temporal information of at least one of the K1 objects.

According to one aspect of the present application, it is characterized in that the first MAC CE comprises a first domain, and the first domain is used for indicating whether the first MAC CE comprises the temporal information for the first object.

As one embodiment, the problem to be solved by the present application comprises: how to reduce signaling overhead.

As one embodiment, the problem to be solved by the present application comprises: how the first MAC CE is compatible with the BSR before R17 (comprising R17).

As one embodiment, a characteristic of the above-mentioned method comprises: the first domain is used for indicating whether the first MAC CE comprises the temporal information for the first object.

As one embodiment, the benefit of the above-mentioned method comprises: the method can flexibly indicate whether the first object temporal information is included in the first MAC CE.

As one embodiment, the benefit of the above-mentioned method comprises: the method can also report the data volume information by the first MAC CE even if the temporal information is not indicated, thereby improving the flexibility of the first MAC CE.

The present application discloses a method for a second node used for wireless communication, comprising:
receiving a first MAC PDU, the first MAC PDU comprising at least a first MAC CE, the first MAC CE indicating K1 pieces of data volume information, and the K1 pieces of data volume information being respectively for K1 objects,
wherein after one first-type buffer status report is triggered, the first MAC PDU is sent; the first data volume information is one of the K1 pieces of data volume information, the first object is one of the K1 objects, and the first data volume information is for the first object.

As one embodiment, the position of the first data volume information in the first MAC CE depends on temporal information of at least one of the K1 objects.

As one embodiment, before the first MAC PDU is sent, a logical channel prioritization process is executed; and the order of the first MAC CE in the logical channel prioritization process is not lower than the order of the MAC CE for regular BSR in the logical channel prioritization process.

According to one aspect of the present application, it is characterized by comprising:
sending first signaling, the first signaling indicating a first uplink grant,
wherein only when the first uplink grant cannot accommodate data volume information of K2 objects, the position of the first data volume information in the first MAC CE depends on the temporal information of the at least one of the K1 objects; the K2 objects have data available, any of the K1 objects belongs to the K2 objects, and K1 is less than K2; and the first MAC PDU is sent on the first uplink grant.

According to one aspect of the present application, it is characterized in that a second-type buffer status report is cancelled in response to the first MAC PDU being sent; and the second-type buffer status report is triggered before the first MAC PDU is sent, and the second-type buffer status report comprises at least one of regular BSR, periodic BSR, or padding BSR.

According to one aspect of the present application, it is characterized in that the first MAC CE comprises a first bitmap, the first bitmap consists of K3 bits, and the K3 bits correspond to K3 objects, respectively; and K1 bits among the K3 bits are set as 1, and the K1 bits and the K1 objects are in one-to-one correspondence.

According to one aspect of the present application, it is characterized in that any bit in the first bitmap corresponds to one index in a first table, the first table comprises Q1 indexes and at most Q1 objects, and each of the at most Q1 objects corresponds to one of the Q1 index; and each of the at most Q1 objects is one piece of temporal information.

According to one aspect of the present application, it is characterized by comprising:
receive a second signaling set, the second signaling set comprising temporal information of at least one of the K1 objects.

According to one aspect of the present application, it is characterized in that the first MAC CE comprises a first domain, and the first domain is used for indicating whether the first MAC CE comprises the temporal information for the first object.

The present application discloses a first node for wireless communication, comprising:
a first transmitter for triggering one first-type buffer status report; and after a behavior triggers a first-type buffer status report, sending a first MAC PDU, wherein the first MAC PDU comprises at least a first MAC CE; the first MAC CE indicates K1 pieces of data volume information; the K1 pieces of data volume information are respectively for K1 objects;
wherein first data volume information is one piece of data volume information among the K1 pieces of data volume information, a first object is one of the K1 objects, and the first data volume information is for the first object; and the position of the first data volume information in the first MAC CE depends on temporal information of at least one of the K1 objects.

The present application discloses a second node for wireless communication, comprising:
a second receiver for receiving a first MAC PDU, the first MAC PDU comprising at least a first MAC CE, the first MAC CE indicating K1 pieces of data volume information, and the K1 pieces of data volume information being respectively for K1 objects,
wherein after one first-type buffer status report is triggered, the first MAC PDU is sent; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects.

As one embodiment, compared with a traditional solution, the present application has the following advantages:
- . avoiding a packet loss;
- . avoid resource waste;
- . shortening scheduling delay;
- . improving scheduling performance;
- . improving flexibility of a first MAC CE; and
- . improving compatibility of the first MAC CE.

### Brief Description of the Drawings

Other features, purposes, and advantages of the present application will become more apparent by reading the detailed description of the non-limiting embodiments with reference to the following figures:
FIG. 1 shows a flow chart of a transmission of a first MAC PDU according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a radio signal transmission flow chart according to one embodiment of the present application;
FIG. 6 shows a radio signal transmission flow chart according to another embodiment of the present application;
FIG. 7 shows a radio signal transmission flow chart according to yet another embodiment of the present application;
FIG. 8 shows a radio signal transmission flow chart according to yet another embodiment of the present application;
FIG. 9 shows a schematic diagram of a first MAC CE comprising a first bitmap according to one embodiment of the present application;
FIG. 10 shows a schematic diagram of a first table according to one embodiment of the present application;
FIG. 11 shows a schematic diagram of a first MAC CE comprising a first domain according to one embodiment of the present application;
FIG. 12 shows a schematic diagram of reporting information of a first object according to one embodiment of the present application;
FIG. 13 shows a schematic diagram of reporting information of a first object according to another embodiment of the present application;
FIG. 14 shows a schematic diagram of a format of a first MAC CE according to one embodiment of the present application;
FIG. 15 shows a schematic diagram of a format of a first MAC CE according to another embodiment of the present application;
FIG. 16 shows a structural block diagram of a processing device for a first node according to one embodiment of the present application; and
FIG. 17 shows a structural block diagram of a processing device used in a second node device according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

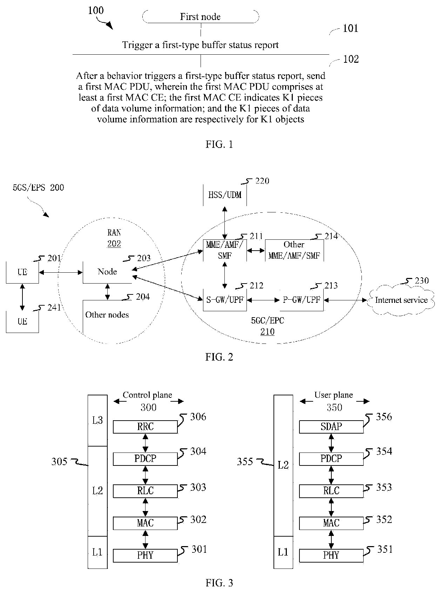

Embodiment 1 illustrates a flow chart of a transmission of a first MAC PDU according to one embodiment of the present application, as shown in FIG. 1. In FIG. 1, each block represents one step, and it is particularly important to emphasize that the order of the blocks in the figure does not represent a temporal sequence between the steps represented.

In Embodiment 1, in step 101, a first node in the present application triggers a first-type buffer status report; and in step 102, after a behavior triggers one first-type buffer status report, a first MAC PDU is sent, the first MAC PDU comprises at least a first MAC CE, the first MAC CE indicates K1 pieces of data volume information, and the K1 pieces of data volume information are respectively for K1 objects, wherein first data volume information is one piece of data volume information among the K1 pieces of data volume information, a first object is one of the K1 objects, and the first data volume information is for the first object; and the position of the first data volume information in the first MAC CE depends on temporal information of at least one of the K1 objects.

As one embodiment, before the behavior triggers one first-type buffer status report, at least one first-type buffer status report is triggered.

As one embodiment, after the behavior triggers one first-type buffer status report, at least one first-type buffer status report is triggered.

As one embodiment, after the behavior triggers one first-type buffer status report and before the first MAC PDU is sent, any BSR MAC CE other than the first MAC CE is not sent.

As one embodiment, after the behavior triggers one first-type buffer status report and before the first MAC PDU is sent, any BSR MAC CE comprising temporal information other than the first MAC CE is not sent.

As one embodiment, the first-type buffer status report is regular BSR.

As one embodiment, the first-type buffer status report is periodic BSR.

As one embodiment, the first-type buffer status report is padding BSR.

As one embodiment, the first-type buffer status report is not any BSR format in 3GPP TS 38.321 R17 version or a version before R17.

As one embodiment, the first-type buffer status report is not any one of the regular BSR, the periodic BSR, or the padding BSR.

As one embodiment, the first-type buffer status report is a BSR format in 3GPP TS 38.321 R17 version or a version after R17.

As one embodiment, the first-type buffer status report is one piece of BSR.

As one embodiment, the first-type buffer status report is any BSR.

As one embodiment, the first-type buffer status report is the BSR triggered by a data packet set.

As one embodiment, the first-type buffer status report is enhanced BSR.

As one embodiment, the first-type buffer status report is enhanced regular BSR.

As one embodiment, the first-type buffer status report is the BSR for XR.

As one embodiment, the first-type buffer status report is the BSR for a PDU set.

As one embodiment, the first-type buffer status report is used for buffer data report.

As one embodiment, the first-type buffer status report is used for reporting a buffer status.

As one embodiment, the first-type buffer status report is used for reporting data volume.

As one embodiment, the first-type buffer status report is used for reporting a buffered data volume.

As one embodiment, the first-type buffer status report is used for reporting an expected data volume.

As one embodiment, the first-type buffer status report is used for reporting the data volume for each LCG.

As one embodiment, the first-type buffer status report is used for reporting the data volume for one LCG.

As one embodiment, the first-type buffer status report is used for reporting the data volume for a plurality of LCGs.

As one embodiment, the first-type buffer status report is used for reporting the data volume for the PDU set in one LCG.

As one embodiment, the first-type buffer status report is used for reporting the data volume for the PDU set.

As one embodiment, the first-type buffer status report is used for reporting the data volume for at least one PDU set.

As one embodiment, the first-type buffer status report is for at least one data packet set.

As one embodiment, the first-type buffer status report is for a logical channel to which at least one data packet set belongs.

As one embodiment, the first-type buffer status report is for an LCG to which the logical channel belongs, wherein at least one data packet set belongs to the logical channel belongs.

As one embodiment, the first-type buffer status report is for only one data packet set.

As one embodiment, the first-type buffer status report is for the logical channel to which only one data packet set belongs.

As one embodiment, the first-type buffer status report is for the LCG to which the logical channel belongs, wherein to only one data packet set belongs to the logical channel.

As one embodiment, the first-type buffer status report comprises the BSR for the data packet set.

As one embodiment, data available is used for triggering the first-type buffer status report.

As one embodiment, at least one object has data available used for triggering the first-type buffer status report.

As one embodiment, at least one object has data available, and the available data of the at least one object comprising the available data of at least one data packet set is used for triggering the first-type buffer status report.

As one embodiment, at least one data packet set is used for triggering the first-type buffer status report.

As one embodiment, if uplink data does not comprise a data packet in any data packet set, the first-type buffer status report is not triggered.

As one embodiment, the first-type buffer status report is triggered only when at least the uplink data comprises the data packet in the data packet set.

As one embodiment, if the uplink data of one logical channel belonging to one LCG is valid for a first MAC entity, and the priority of the logical channel to which the uplink data belongs is higher than the priority of any logical channel of any LCG comprising valid uplink data or any logical channel belonging to one LCG does not comprise the valid uplink data, the first-type buffer status report is triggered.

As one embodiment, if the uplink data of one logical channel belonging to one LCG is valid for the first MAC entity, and any uplink data valid for the first MAC entity does not belong to any data packet set, and the priority of the logical channel to which the uplink data belongs is higher than the priority of any logical channel of any LCG comprising the valid uplink data or any logical channel belonging to one LCG does not comprise the valid uplink data, the first-type buffer status report is triggered.

As one embodiment, if the uplink data in at least one data packet set is valid for the first MAC entity, the first-type buffer status report is triggered.

As one embodiment, if the uplink data of one logical channel belonging to one LCG is valid for the first MAC entity, and the uplink data valid for the first MAC entity comprises the data packet in at least one data packet set, the first-type buffer status report is triggered.

As one embodiment, if the uplink data of one logical channel belonging to one LCG is valid for the first MAC entity, and the uplink data valid for the first MAC entity belongs to at least one data packet set, the first-type buffer status report is triggered.

As one embodiment, the first-type buffer status report has precedence over the padding BSR.

As one embodiment, the first-type buffer status report shall have precedence over the padding BSR.

As one embodiment, the first-type buffer status report has precedence over the regular BSR and the periodic BSR.

As one embodiment, the first-type buffer status report shall have precedence over the regular BSR and the periodic BSR.

As one embodiment, the first-type buffer status report has the same priority as the regular BSR and the periodic BSR.

As one embodiment, at least two data packets in one data packet set have a dependency relationship.

As one embodiment, any two data packets in one data packet set have the dependency relationship.

As one embodiment, one data packet set comprises at least one data packet.

As one embodiment, one data packet set comprises a plurality of data packets.

As one embodiment, one data packet set comprises a finite number of data packets.

As one embodiment, one data packet set is one PDU set.

As one embodiment, data packets in one data packet set having the dependency relationship comprises: any two data packets in the data packet set have the dependency relationship.

As one embodiment, data packets in one data packet set having the dependency relationship comprises: any data packet in the data packet set depends on at least one data packet other than the data packet in the one data packet set.

As one embodiment, data packets in one data packet set having the dependency relationship comprises: decoding of any data packet in the one data packet set depends on at least one data packet other than the data packet in the one data packet set.

As one embodiment, data packets in one data packet set having the dependency relationship comprises: a picture of any data packet in the one data packet set depends on at least one data packet other than the data packet in the one data packet set.

As one embodiment, data packets in one data packet set having the dependency relationship comprises: the QoS of any data packet in the one data packet set depends on at least one data packet other than the data packet in the one data packet set.

As one embodiment, the data packets in one data packet set having the dependency relationship comprises: all data packets in the one data packet set are used for constructing the same picture.

As one embodiment, the data packets in one data packet set having the dependency relationship comprises: all data packets in the one data packet set belong to the same QoS flow.

As one embodiment, the data packets in one data packet set having the dependency relationship comprises: there is a delay requirement for all data packets in the one data packet set.

As one embodiment, the data packets in one data packet set having the dependency relationship comprises: the delay budget for all data packets in the one data packet set cannot exceed one threshold value.

As one embodiment, one data packet set is associated with one PDCP (Packet Data Convergence Protocol) entity.

As one embodiment, one data packet set is associated with a plurality of PDCP entities.

As one embodiment, one data packet set is not associated with the plurality of PDCP entities.

As one embodiment, one data packet set is associated with only one DRB (Data Radio Bearer).

As one embodiment, one data packet set is associated with a plurality of DRBs.

As one embodiment, one data packet set is associated with one or more DRBs.

As one embodiment, all data packets in one data packet set belong to the same LCG.

As one embodiment, any two data packets in one data packet set belong to different LCGs.

As one embodiment, there are two data packets in one data packet set belonging to different LCGs.

As one embodiment, any two data packets in one data packet set belong to the same LCG.

As one embodiment, any two data packets in one data packet set belong to the same logical channel of the same LCG.

As one embodiment, any two data packets in one data packet set belong to different logical channels of the same LCG.

As one embodiment, each data packet in one data packet set is an uplink data packet.

As one embodiment, each data packet in one data packet set is a backhaul link data packet.

As one embodiment, each data packet in one data packet set is a sidelink data packet.

For the one embodiment, at least one data packet in one data packet set is a buffered data packet.

For the one embodiment, each data packet in one data packet set is the buffered data packet.

For the one embodiment, at least one data packet in one data packet set is an expected data packet.

For the one embodiment, each data packet in one data packet set is the expected data packet.

As one embodiment, one data packet in one data packet set is one PDU.

As one embodiment, one data packet in one data packet set is a payload of one PDU.

As one embodiment, one data packet in one data packet set is one SDU.

As one embodiment, one data packet in one data packet set is a payload of one SDU.

As one embodiment, one data packet in one data packet set is one IP (Internet Protocol) packet.

As one embodiment, one data packet in one data packet set is a payload of one IP packet.

As one embodiment, one data packet in one data packet set is one IP PDU.

As one embodiment, one data packet in one data packet set is one application layer PDU.

As one embodiment, one data packet in one data packet set is one application layer SDU.

As one embodiment, one data packet in one data packet set is one non-access layer PDU.

As one embodiment, one data packet in one data packet set is one non-access layer SDU.

As one embodiment, one data packet in one data packet set is one PDU of an SDAP (Service Data Adaptation Protocol) layer.

As one embodiment, one data packet in one data packet set is one SDAP PDU.

As one embodiment, one data packet in one data packet set is one SDAP SDU.

As one embodiment, one data packet in one data packet set is a data packet of a PDCP sub-layer.

As one embodiment, one data packet in one data packet set is one PDCP PDU.

As one embodiment, one data packet in one data packet set is one PDCP SDU.

As one embodiment, one data packet in one data packet set is one PDCP Control PDU.

As one embodiment, one data packet in one data packet set is one PDCP Data PDU.

As one embodiment, one data packet in one data packet set is one PDCP Data PDU to be retransmitted for an AM (Acknowledged Mode) DRB.

As one embodiment, one data packet in one data packet set is one PDCP SDU to be retransmitted for the AM DRB.

As one embodiment, one data packet in one data packet set is a data packet of an RLC sub-layer.

As one embodiment, one data packet in one data packet set is one RLC PDU.

As one embodiment, one data packet in one data packet set is one RLC SDU.

As one embodiment, one data packet in one data packet set is one RLC SDU segment.

As one embodiment, one data packet in one data packet set is one RLC data PDU to be initially transmitted.

As one embodiment, one data packet in one data packet set is one RLC data PDU to be retransmitted for an RLC AM.

As one embodiment, a type of any data packet in one data packet set is one data packet type in a first candidate data packet type set.

As one sub-embodiment of this embodiment, one data packet type in the first candidate data packet type set is a PDCP SDU (Service Data Unit).

As one sub-embodiment of this embodiment, one data packet type in the first candidate data packet type set is a PDCP Data PDU.

As one sub-embodiment of this embodiment, one data packet type in the first candidate data packet type set is a PDCP Control PDU.

As one sub-embodiment of this embodiment, one data packet type in the first candidate data packet type set is a PDCP SDU to be retransmitted for an AM (Acknowledge Mode) DRB (Data Radio Bearer).

As one sub-embodiment of this embodiment, one data packet type in the first candidate data packet type set is the PDCP Data PDU to be retransmitted for the AM DRB.

As one sub-embodiment of this embodiment, one data packet type in the first candidate data packet type set is an RLC (Radio Link Control) SDU.

As one sub-embodiment of this embodiment, one data packet type in the first candidate data packet type set is the RLC SDU segment.

As one sub-embodiment of this embodiment, one data packet type in the first candidate data packet type set is an RLC data PDU to be initially transmitted.

As one sub-embodiment of this embodiment, one data packet type in the first candidate data packet type set is the RLC data PDU to be retransmitted for an RLC AM.

As one sub-embodiment of this embodiment, the data packet types in the first candidate data packet type set comprise at least one of the PDCP SDU or the PDCP Data PDU or the PDCP Control PDU or the PDCP SDU to be retransmitted for the AM DRB or the PDCP Data PDU to be retransmitted for the AM DRB or the RLC SDU or an RLC SDU segment or the RLC data PDU to be initially transmitted or the RLC data PDU to be retransmitted for RLC AM.

As one embodiment, each data packet in one data packet set corresponds to one given identifier.

As one embodiment, each data packet in one data packet set is configured with one given identifier.

As one embodiment, each data packet in one data packet set is indicated with one given identifier.

As one embodiment, each data packet in one data packet set is marked with one given identifier.

As one embodiment, the one given identifier indicates a group of data packets.

As one embodiment, the one given identifier indicates at least one data packet.

As one embodiment, the one given identifier indicates one data packet set.

As one embodiment, the one given identifier indicates at least one data packet set.

As one embodiment, the one given identifier is used for identifying a group of PDUs.

As one embodiment, the one given identifier is used for determining one PDU set.

As one embodiment, the one given identifier indicates one DRB.

As one embodiment, the one given identifier indicates one PDU set.

As one embodiment, the one given identifier indicates one PDCP set.

As one embodiment, the one given identifier indicates one QoS flow.

As one embodiment, the one given identifier is configured at a PDCP sub-layer.

As one embodiment, the one given identifier is configured at a higher layer of the PDCP sub-layer.

As one embodiment, the one given identifier is associated with at least one LCG.

As one embodiment, the one given identifier is associated with a plurality of LCGs.

As one embodiment, the one given identifier is associated with one LCG.

As one embodiment, the one given identifier comprises at least one DRB ID.

As one embodiment, the one given identifier is associated with a plurality of DRBs.

As one embodiment, the one given identifier is associated with one DRB.

As one embodiment, the one given identifier comprises one or more PDCP SNs.

As one embodiment, the one given identifier comprises one or more PDCP COUNTs.

As one embodiment, the one given identifier comprises a QoS flow ID.

As one embodiment, the one given identifier comprises a PDU session ID.

As one embodiment, the one given identifier is one integer.

As one embodiment, the one given identifier is one time interval.

As one embodiment, the one given identifier is one display identifier.

As one embodiment, the one given identifier is one PDU set ID.

As one embodiment, the one given identifier is one DRB ID.

As one embodiment, the one given identifier is an identifier of one object.

As one embodiment, the first MAC PDU is sent on one uplink grant (UL grant).

As one sub-embodiment of this embodiment, the one uplink grant is a PUSCH (Physical Uplink Shared Channel) resource.

As one sub-embodiment of this embodiment, the one uplink grant is a PSSCH (Physical Sidelink Shared Channel) resource.

As one sub-embodiment of this embodiment, the one uplink grant is received at least before the first MAC PDU is sent.

As one sub-embodiment of this embodiment, the one uplink grant is received after the behavior triggers one first-type buffer status report.

As one sub-embodiment of this embodiment, the one uplink grant is received before the behavior triggers one first-type buffer status report.

As one sub-embodiment of this embodiment, the one uplink grant comprises the first uplink grant in the present application.

As one embodiment, the first MAC PDU is sent by an air interface.

As one embodiment, the first MAC PDU is sent by a UL-SCH (Uplink Shared Channel).

As one embodiment, the first MAC PDU is sent by an SL-SCH (Sidelink Shared Channel).

As one embodiment, the first MAC PDU is sent in response to the behavior triggering one first-type buffer status report.

As one embodiment, the first MAC PDU is sent after the behavior triggers one first-type buffer status report.

As one embodiment, the first MAC PDU comprises at least one MAC subPDU.

As one embodiment, the first MAC PDU comprises only one MAC subPDU.

As one embodiment, the first MAC PDU comprises a plurality of MAC subPDUs.

As one embodiment, one MAC subPDU in the first MAC PDU comprises at least a first MAC CE.

As one embodiment, the first MAC PDU comprises at least the first MAC CE and a first MAC subheader, and the first MAC CE and the first MAC subheader belong to the same MAC subPDU.

As one embodiment, the first MAC subheader is used for the UL-SCH.

As one embodiment, the first MAC subheader indicates the first MAC CE.

As one embodiment, the first MAC subheader indicates a format of the first MAC CE.

As one embodiment, the first MAC subheader indicates a type of the first MAC CE.

As one embodiment, the first MAC subheader comprises one LCID (Logical Channel ID) field, and the LCID field is not set as any one of 59 or 60 or 61 or 62.

As one embodiment, the first MAC subheader comprises one LCID field, and the LCID field is set as 37 or 38 or 39 or 40 or 41 or 42.

As one embodiment, the first MAC subheader comprises one eLCID (extended LCID) field, and the eLCID field is not set as any one of 245 or 246 or 247 or 248 or 249 or 255.

As one embodiment, the first MAC subheader comprises one eLCID field, and the eLCID field is set as an integer not less than 0 and not greater than 228.

As one embodiment, the first MAC subheader comprises one eLCID field, and the eLCID field is set as 228 or 227 or 226 or 225 or 224 or 223 or 222 or 221 or 220 or 219 or 218 or 217 or 216 or 215.

As one embodiment, the format of the first MAC CE is a truncated format.

As one embodiment, the format of the first MAC CE is not a truncated format.

As one embodiment, the first MAC CE does not comprise any bitmap used for indicating the K3 objects.

As one embodiment, the first MAC CE indicates at least one piece of temporal information.

As one embodiment, the first MAC CE does not indicate any temporal information.

As one embodiment, the first MAC CE indicates temporal information for at least one of the K1 objects.

As one embodiment, the first MAC CE does not indicate temporal information for any of the K1 objects.

As one embodiment, the first MAC CE does not indicate data volume information for any object other than the K1 objects.

As one embodiment, K1 is equal to 1.

As one embodiment, K1 is greater than 1.

As one embodiment, K1 is equal to K2 in the present application.

As one embodiment, K1 is not greater than K2 in the present application.

As one embodiment, K1 is less than K2 in the present application.

As one embodiment, K1 is not greater than Q1 in the present application.

As one embodiment, a maximum value of K1 is Q1 in the present application.

As one embodiment, the first MAC CE comprises K1 data volume information fields, and the K1 data volume information fields are respectively used for indicating the K1 pieces of data volume information.

As one sub-embodiment of this embodiment, each of the K1 data volume information fields indicates one piece of data volume information.

As one sub-embodiment of this embodiment, each of the K1 data volume information fields has the same size.

As one embodiment, the first MAC CE comprises at least the K1 data volume information fields.

As one embodiment, the first MAC CE comprises at least the K1 data volume information fields and the reserved field.

As one embodiment, the first MAC CE consists of the K1 data volume information fields.

As one embodiment, the first MAC CE consists of the K1 data volume information fields and at least one reserved field.

As one embodiment, one data volume information field indicates one piece of data volume information.

As one embodiment, one data volume information field indicates an index of one piece of data volume information.

As one embodiment, one data volume information field is set as the index of one piece of data volume information.

As one embodiment, one data volume information field is set as one index in a second table, and the one index indicates one piece of data volume information in the second table.

As one embodiment, one data volume information field is set as one index in the second table, and the data volume information is the data volume information corresponding to the one index.

As one embodiment, one data volume information field is set as one index in the second table.

As one embodiment, one of K1 data volume information fields is set as one of the Q2 indexes.

As one embodiment, Q2 is 32.

As one embodiment, Q2 is 64.

As one embodiment, Q2 is 128.

As one embodiment, Q2 is 256.

As one embodiment, Q2 is 512.

As one embodiment, Q2 is 1024.

As one embodiment, one of the K1 data volume information fields is set as j, and j is one of the Q2 indexes, and j indicates the data volume information #j.

As one embodiment, j is not less than 0 and j is not greater than Q2-1.

As one embodiment, j is not less than 0 and j is not greater than Q2-2.

As one embodiment, j is not less than 0 and j is not greater than Q2-3.

As one embodiment, j is not less than 0 and j is not greater than Q2-4.

As one embodiment, the Q2 index is one index in the second table; the second table comprises the Q2 indexes and at most Q2 pieces of data volume information; and each of the at most Q2 pieces of data volume information corresponds to one of the Q2 indexes.

As one embodiment, the Q2 indexes indicate at most Q2 pieces of data volume information.

As one embodiment, the Q2 indexes indicate Q2 pieces of data volume information.

As one embodiment, the Q2 indexes indicate less than Q2 pieces of data volume information, and at least one of the Q2 indexes is reserved.

As one embodiment, the second table is Table 6.1.3.1-1 of 3GPP TS38.321.

As one embodiment, the second table is Table 6.1.3.1-2 of 3GPP TS38.321.

As one embodiment, the second table is Table 6.1.3.1-3 of 3GPP TS38.321.

As one embodiment, in the second table, index j=0 is reserved.

As one embodiment, in the second table, index j=Q2-1 is reserved.

As one embodiment, in the second table, data volume information #Q2-2>V_Q2-3; and index j=Q2-1 is reserved.

As one embodiment, in the second table, data volume information #0≤V_0, j=0.

As one embodiment, in the second table, data volume information #j≤V_j.

As one embodiment, in the second table, V_j-1 <data volume information #j≤V_j.

As one embodiment, each of the at most Q2 pieces of data volume information corresponds to one data volume interval.

As one embodiment, any two of the at most Q2 pieces of data volume information are consecutive.

As one embodiment, in the second table, data volume information #0≤V_0, data volume information #1≤V_1...data volume information #j≤V_j, data volume information #j+1≤V_j+1...data volume information #Q2-2≤V_Q2-2, and data volume information #Q2-1 > V_Q2-2.

As one embodiment, in the second table, data volume information #0≤V_0, V _0 < data volume information #1≤V_1...V_j-1 < data volume information #j≤V_j, V_j < data volume information #j+1≤V_j+1...V_Q2-3<data volume information #Q2-2≤V_Q2-2, and data volume information #Q2-1 > V_Q2-2.

As one embodiment, V_0<V_1... <V_j<V_j+1... <V_Q2-2.

As one embodiment, in the second table, data volume information #0≤V_0, data volume information #1≤V_1...data volume information #j≤V_j, data volume information #j+1≤V_j+1...data volume information #Q2-3<V_Q2-3, and data volume information #Q2-2> V_Q2-3.

As one embodiment, in the second table, data volume information #0≤V_0, V _0<data volume information #1≤V_1...V_j-1 < data volume information #j≤V_j, V_j < data volume information #j+1≤V_j+1...V_Q2-4<data volume information #Q2-3≤V_Q2-3, and data volume information #Q2-2>V_Q2-3.

As one embodiment, V_0<V_1...<V_j<V_j+1... <V_Q2-3.

As one embodiment, one data volume information field belongs to 1 octet.

As one embodiment, one data volume information field belongs to 2 consecutive octets.

As one embodiment, the number of bits occupied by each data volume information field is equal to log2(Q2).

As one embodiment, the octets occupied by each data volume information field are equal to log2(Q2)/8.

As one embodiment, each data volume information field occupies 1 octet.

As one embodiment, each data volume information field occupies 8 bits.

As one embodiment, each data volume information field occupies 2 consecutive octets.

As one embodiment, each data volume information field occupies 9 bits.

As one embodiment, each data volume information field occupies 10 bits.

As one embodiment, each data volume information field occupies 11 bits.

As one embodiment, each data volume information field occupies 12 bits.

As one embodiment, each data volume information field occupies 13 bits.

As one embodiment, each data volume information field occupies 14 bits.

As one embodiment, each data volume information field occupies 15 bits.

As one embodiment, each data volume information field occupies 16 bits.

As one embodiment, the data volume information field for one object is set according to the index of the data volume information corresponding to the data volume of the object.

As one embodiment, the data volume information field for one object is set as the index of the data volume information corresponding to the data volume of the object.

As one embodiment, each of the K1 data volume information fields is set by looking up a table.

As one embodiment, the first data volume information field is set by looking up a table.

As one embodiment, each of the K1 data volume information fields is set by looking up the second table.

As one embodiment, the first data volume information field is set by looking up the second table.

As one embodiment, in response to the first MAC CE being received by a second node, the second node determines the first data volume information by looking up a table.

As one embodiment, in response to the first MAC CE being received by the second node, the second node determines each of the K1 pieces of data volume information by looking up the second table.

As one embodiment, in response to the first MAC CE being received by a second node, the second node determines the first data volume information by looking up a table.

As one embodiment, in response to the first MAC CE being received by the second node, the second node determines each of the K1 pieces of data volume information by looking up the second table.

As one embodiment, the K1 pieces of data volume information and the K1 objects are in one-to-one correspondence.

As one embodiment, any of the K1 pieces of data volume information is related to only one of the K1 objects.

As one embodiment, any of the K1 pieces of data volume information depends on only one of the K1 objects.

As one embodiment, each of the K1 pieces of data volume information is the data volume information for one of the K1 objects.

As one embodiment, any two of the K1 pieces of data volume information are respectively related to two different objects of the K1 objects.

As one embodiment, any two of the K1 pieces of data volume information are respectively the data volume information for two different objects of the K1 objects.

As one embodiment, the K1 data volume information fields are respectively for the K1 objects.

As one embodiment, one piece of data volume information is determined for one object.

As one embodiment, one data volume information field is set according to one object.

As one embodiment, one piece of data volume information is related to the data volume of at least one object.

As one embodiment, one piece of data volume information is related to the data volume of one object.

As one embodiment, one piece of data volume information comprises one buffer size.

As one embodiment, one piece of data volume information comprises one buffer size level.

As one embodiment, one piece of data volume information comprises one buffer size range.

As one embodiment, one piece of data volume information comprises one data volume level.

As one embodiment, one piece of data volume information is related to the data volume of one object, and the one piece of data volume information is not related to the data volume of any object other than the one object.

As one embodiment, one piece of data volume information comprises the data volume for one object.

As one embodiment, one piece of data volume information comprises a total amount of data available to one object.

As one embodiment, one piece of data volume information comprises a total amount of buffered data of one object.

As one embodiment, one piece of data volume information comprises a total amount of the data expected to arrive for one object.

As one embodiment, one piece of data volume information comprises a total amount of buffered data for one object.

As one embodiment, one piece of data volume information is counted in a unit of objects.

As one embodiment, one object is one LCG.

As one embodiment, one object is one logical channel.

As one embodiment, one object is one PDU set.

As one embodiment, one object is one piece of temporal information.

As one embodiment, one object is indexed by one identifier.

As one embodiment, one object corresponds to one index.

As one embodiment, one object is indicated by one index.

As one embodiment, one object is indicated by one bit in one bitmap in the first MAC CE.

As one embodiment, one object is indicated by one MAC field in the first MAC CE.

As one embodiment, an index of one object is LCG ID.

As one embodiment, an index of one object is a logical channel identifier.

As one embodiment, an index of one object is an index of one table.

As one embodiment, an index of one object is an index of the second table.

As one embodiment, a MAC field in the first MAC CE indicates an index of the first object.

As one embodiment, one bit in one bitmap in the first MAC CE indicates the index of the first object.

As one embodiment, if one piece of data available belongs to object #0, the temporal information of the one piece of data available ≤T_0; If one piece of data available belongs to object #1, the temporal information of the data available ≤T_1, ..., and so on, ...; and one object is one piece of temporal information.

As one embodiment, if one piece of data available belongs to object #0, the one piece of data available belongs to LCG0; If one piece of data available belongs to object #1, the data available belongs to LCG1, ..., and so on, ...; and one object is one LCG.

As one embodiment, if one piece of data available belongs to object #0, the available data belongs to logical channel 0; If one piece of data available belongs to object #1, the one piece of data available belongs to logical channel 1, ..., and so on, ...; and one object is one logical channel.

As one embodiment, if one piece of data available belongs to object #0, the available data belongs to logical channel 0; If one piece of data available belongs to object #1, the one piece of data available belongs to logical channel 1, ..., and so on, ...; and one object is one logical channel.

As one embodiment, any object other than the K1 objects has no data available.

As one embodiment, only the K1 objects have data available.

As one embodiment, the first data volume information is the data volume information of the first object in the K1 pieces of data volume information.

As one embodiment, the first data volume information is the first piece of data volume information in the first MAC CE.

As one embodiment, the first data volume information is the second piece of data volume information in the first MAC CE.

As one embodiment, the first data volume information is the last piece of data volume information in the first MAC CE.

As one embodiment, the first data volume information is one piece of data volume information of any position in the first MAC CE.

As one embodiment, the first data volume information field is one of the K1 data volume information fields, and the first data volume information field indicates the first data volume information.

As one embodiment, the first MAC CE comprises a second domain, and the second domain indicates temporal information for the first object.

As one embodiment, the first MAC CE comprises a second domain, and the second domain indicates temporal information for the first object; the second domain is set as one index in a first table, and the first table comprises Q1 indexes and at most Q1 objects, and each of the at most Q1 objects corresponds to one of the Q1 indexes; and each of the at most Q1 objects is one piece of temporal information.

As one embodiment, the position of the first data volume information in the first MAC CE depends on temporal information of each of the K1 objects.

As one embodiment, the position of each of the K1 pieces of data volume information in the first MAC CE depends on temporal information of at least one of the K1 objects.

As one embodiment, the order of the K1 pieces of data volume information in the first MAC CE depends on the temporal information of at least one of the K1 objects.

As one embodiment, the position of the first data volume information in the first MAC CE is related to sorting of the K1 pieces of data volume information, and the sorting of the K1 pieces of data volume information depends on the temporal information of at least one of the K1 objects.

As one embodiment, the position of the first data volume information in the first MAC CE is related to the sorting of the K1 pieces of data volume information, and the sorting of the K1 pieces of data volume information depends on the temporal information of each of the K1 objects.

As one embodiment, the K1 pieces of data volume information are sorted in an ascending order of the temporal information of the K1 objects.

As one embodiment, the K1 pieces of data volume information are sorted in a descending order of the temporal information of the K1 objects.

As one embodiment, the K1 pieces of data volume information is sorted in an ascending order of the indexes of the K1 objects, and the ascending order of the K1 pieces of data volume information by the indexes of the K1 objects is used for determining that the K1 pieces of data volume information are sorted in the ascending order according to the temporal information of the K1 objects; and each of the K1 objects is one piece of temporal information.

As one embodiment, the K1 pieces of data volume information is sorted in an ascending order of the indexes of the K1 objects, and the ascending order of the K1 pieces of data volume information by the indexes of the K1 objects is used for determining that the K1 pieces of data volume information are sorted in the descending order according to the temporal information of the K1 objects; and each of the K1 objects is one piece of temporal information.

As one embodiment, the K1 pieces of data volume information is sorted in a descending order of the indexes of the K1 objects, and the descending order of the K1 pieces of data volume information according to the indexes of the K1 objects is used for determining that the K1 pieces of data volume information are sorted in the descending order according to the temporal information of the K1 objects; and each of the K1 objects is one piece of temporal information.

As one embodiment, the K1 pieces of data volume information is sorted in a descending order of the indexes of the K1 objects, and the descending order of the K1 pieces of data volume information according to the indexes of the K1 objects is used for determining that the K1 pieces of data volume information are sorted in the ascending order according to the temporal information of the K1 objects; and each of the K1 objects is one piece of temporal information.

As one embodiment, the K1 pieces of data volume information are sorted in a descending order according to the priority of the K1 objects, and the descending order of the K1 pieces of data volume information according to the priority of the K1 objects is used for determining that the K1 pieces of data volume information are sorted in the ascending order according to the temporal information of the K1 objects; each of the K1 objects is one piece of temporal information; and the smaller the temporal information, the higher the priority.

As one embodiment, the K1 pieces of data volume information are sorted in a descending order according to the priority of the K1 objects, and the descending order of the K1 pieces of data volume information according to the priority of the K1 objects is used for determining that the K1 pieces of data volume information are sorted in the descending order according to the temporal information of the K1 objects; and each of the K1 objects is one piece of temporal information; and the larger the temporal information, the higher the priority.

As one embodiment, the K1 pieces of data volume information are sorted in the ascending order of the indexes of the K1 objects; and each of the K1 objects is one LCG.

As one embodiment, the K1 pieces of data volume information are sorted in the descending order of the indexes of the K1 objects; and each of the K1 objects is one LCG.

As one embodiment, the K1 pieces of data volume information are sorted in the descending order of the indexes of the K1 objects.

As one embodiment, the first data volume information depends on the temporal information of each of the K1 objects, and the first data volume information depends on an LCG ID of each of the K1 objects.

As one embodiment, the minimum value in the temporal information of the K1 objects is less than a first threshold value.

As one embodiment, the minimum value of the K1 pieces of data volume information is greater than a second threshold value.

As one embodiment, the first MAC PDU comprises the first MAC CE only when the minimum value of the temporal information of the K1 objects is less than the first threshold value.

As one embodiment, the first MAC PDU comprises the first MAC CE only when the minimum value of the K1 pieces of data volume information is greater than the second threshold value.

As one embodiment, the first MAC PDU comprises the first MAC CE only when the minimum value of the temporal information of the K1 objects is less than the first threshold value, or the minimum value of the K1 pieces of data volume information is greater than the second threshold value.

As one embodiment, the temporal information of one object is related to a delay budget of the one object.

As one embodiment, the temporal information of one object is related to a remaining delay budget of the one object.

As one embodiment, the temporal information is related to the expiration time of the data packet set.

As one embodiment, the temporal information is related to a PDB (PDU Delay Budget).

As one embodiment, the temporal information is related to a PSDB (PDU-Set Delay Budget).

As one embodiment, the temporal information is related to a remaining PSDB (PDU-Set Delay Budget).

As one embodiment, the temporal information indicates the PSDB.

As one embodiment, the temporal information indicates the remaining PSDB.

As one embodiment, the temporal information indicates the remaining PSDB.

As one embodiment, the temporal information comprises one time interval.

As one embodiment, the temporal information comprises one time interval.

As one embodiment, the temporal information comprises time allocation.

As one embodiment, the temporal information comprises expected time.

As one embodiment, the temporal information comprises transmission time.

As one embodiment, the temporal information comprises required transmission time.

As one embodiment, the temporal information comprises remaining transmission time.

As one embodiment, the temporal information comprises a data packet arrival rate.

As one embodiment, the temporal information comprises one time interval.

As one embodiment, the temporal information comprises one moment.

As one embodiment, the first-type buffer status report is cancelled in response to the first MAC PDU being sent.

As one embodiment, in response to the first MAC PDU being sent, if at least the first MAC CE comprises a buffer status of the last event that triggers the first-type buffer status report until (before) the first MAC PDU is assembled, the first-type buffer status report is cancelled.

As one embodiment, in response to the first MAC PDU being sent, if at least the first MAC CE comprises the buffer status of the last event that triggers one piece of BSR until (before) the first MAC PDU is assembled, the first-type buffer status report is cancelled.

As one embodiment, in response to the first MAC PDU being sent, if at least no object is indicated with temporal information, the first-type buffer status report is cancelled.

As one embodiment, the first MAC entity of the first node triggers the first-type buffer status report.

As one embodiment, the first MAC entity of the first node cancels the first-type buffer status report.

As one embodiment, the first MAC entity is associated with an MCG (Master Cell Group) of the first node.

As one embodiment, the first MAC entity is associated with an SCG (Secondary Cell Group) of the first node.

As one embodiment, the first MAC entity is associated with sidelink of the first node.

As one embodiment, the triggering refers to triggering at the MAC sub-layer.

As one embodiment, the triggering refers to triggering of the first MAC entity.

As one embodiment, the triggering comprises trigger.

As one embodiment, the triggering does not comprise sending.

As one embodiment, the K1 objects are indicated with temporal information.

As one embodiment, at least one of the K1 objects is indicated with temporal information.

As one embodiment, at least one of the K1 objects is indicated with temporal information, and at least one of the K1 objects is not indicated with temporal information.

As one embodiment, the K2 objects with data available are indicated with temporal information.

As one embodiment, at least one of the K2 objects with data available is indicated with temporal information.

As one embodiment, at least one of the K2 objects with data available is indicated with temporal information, and at least one of the K1 objects is not indicated with temporal information.

As one embodiment, one object being indicated with temporal information means: temporal information for the one object is indicated by the higher layer.

As one embodiment, one object being indicated with temporal information means: temporal information at least for the one object is determined.

As one embodiment, one object being indicated with temporal information means: the higher layer indicates temporal information for the one object to the MAC sub-layer.

As one embodiment, one object being indicated with temporal information means: the higher layer indicates temporal information for the one object to the PDCP sub-layer.

As one embodiment, one object being indicated with temporal information means: the higher layer indicates temporal information for the one object to the RLC sub-layer.

As one embodiment, the position of the first data volume information in the first MAC CE comprises: the position of the reporting information of the first object in the first MAC CE.

As one embodiment, the position of the first data volume information in the first MAC CE comprises: the position of the first data volume information field in the first MAC CE.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terms. The 5GS/EPS 200 comprises at least one of UE (User Equipment) 201, a RAN (Radio Access Network) 202, a 5GC (5G Core Network)/EPC (Evolved Packet Core) 210, an HSS (Home Subscriber Server)/UDM (Unified Data Management) 220, and an Internet service 230. 5GS/EPS can be interconnected with other access networks, but for simplicity, these entities/interfaces are not shown. As shown, the 5GS/EPS provides packet-switched services, but those skilled in the art will readily appreciate that various concepts presented throughout the present application may be extended to a network providing a circuit-switched service or other cellular networks. RAN comprises a source node 203 and other nodes 204. The node 203 provides user and control plane protocol termination towards UE201. The node 203 can be connected to other nodes 204 via an Xn interface (e.g., backhaul)/X2 interface. The node 203 may also be referred to as a base station, a base transceiving station, a radio base station, a radio transceiver, a transceiver function, a basic service set (BSS), an extended service set (ESS), a TRP (Transmitter Receiver Point), or some other suitable terms. The node 203 provides an access point to 5GC/EPC210 for UE201. Examples of UE201 comprises a cellular phone, a smart phone, a session initiation protocol (SIP) phone, a laptop, a personal digital assistant (PDA), a satellite radio, a non-terrestrial base station communication, a satellite mobile communication, a global positioning system, a multimedia device, a video device, a digital audio player (for example, an MP3 player), a camera, a game console, a drone, an aircraft, a narrowband Internet of Things device, a machine type communication device, a land vehicle, an automobile, a wearable device, or any other similarly functional device. Those skilled in the art may also call the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms. The node 203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is connected to the P-GW/LTPF213. The P-GW provides UE IP address allocation and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem) and a packet switching streaming service.

As one embodiment, the UE201 corresponds to the first node in the present application.

As one embodiment, the UE201 is one piece of user equipment (UE).

As one embodiment, the UE201 is one base station device (BS).

As one embodiment, the UE201 is one relay device.

As one embodiment, the node 203 corresponds to the second node in the present application.

As one embodiment, the node 203 is one base station device.

As one embodiment, the node 203 is user equipment.

As one embodiment, the node 203 is one relay device.

As one embodiment, the node 203 is a gateway.

As one embodiment, the user equipment supports a transmission in a terrestrial network.

As one embodiment, the user equipment supports a transmission in a non-terrestrial network (NTN).

As one embodiment, the user equipment supports a transmission in a large delay difference network.

As one embodiment, the user equipment supports a dual connection (DC) transmission.

As one embodiment, the user equipment comprises a handheld terminal.

As one embodiment, the user equipment comprises a wearable device.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports a low-delay and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a node B (NodeB, NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports the transmission in the non-terrestrial network.

As one embodiment, the base station device supports the transmission in the large delay difference network.

As one embodiment, the base station device supports the transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell.

As one embodiment, the base station device comprises a base station device that supports a large delay difference.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises a base station device.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is on the PHY301 and comprises a MAC (Medium Access Control) sub-layer 302, an RLC (Radio Link Control) sub-layer 303, and a PDCP (Packet Data Convergence Protocol) sub-layer 304. The PDCP sub-layer 304 provides multiplexing between different radio bearer and logical channels. The PDCP sub-layer 304 also provides security by encrypting data packets and provides zone-crossing mobility support. The RLC sub-layer 303 provides segmentation and reassembly of upper-layer packets, retransmission of lost data packets, and reordering of data packets to compensate for unordered reception caused by a HARQ (Hybrid Automatic Repeat Request). The MAC sub-layer 302 provides multiplexing between logical and transmission channels. The MAC sub-layer 302 is also responsible for allocating various radio resources (e.g., resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring lower layers by using RRC signaling. The radio protocol architecture for the user plane 350 comprises a layer 1 (L1 layer) and a layer 2 (L2 layer). The radio protocol architecture in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services.

As one embodiment, the radio protocol architecture in FIG. 3 is applicable to the first node in the present application.

As one embodiment, the radio protocol architecture in FIG. 3 is applicable to the second node in the present application.

As one embodiment, a first-type buffer status report in the present application is triggered in the MAC302 or MAC352.

As one embodiment, a second-type buffer status report in the present application is cancelled in the MAC302 or the MAC352.

As one embodiment, a first MAC PDU in the present application is generated in the MAC302 or the MAC352.

As one embodiment, a first MAC CE in the present application is generated in the MAC302 or the MAC352.

As one embodiment, the first signaling in the present application is generated in the RRC306.

As one embodiment, the first signaling in the present application is generated in the MAC302 or the MAC352.

As one embodiment, the first signaling in the present application is generated in the PHY301 or the PHY351.

As one embodiment, a second signaling set in the present application is generated in the RRC306.

As one embodiment, the second signaling set in the present application is generated in the MAC302 or the MAC352.

As one embodiment, the second signaling set in the present application is generated in the PHY301 or the PHY351.

### Embodiment 4

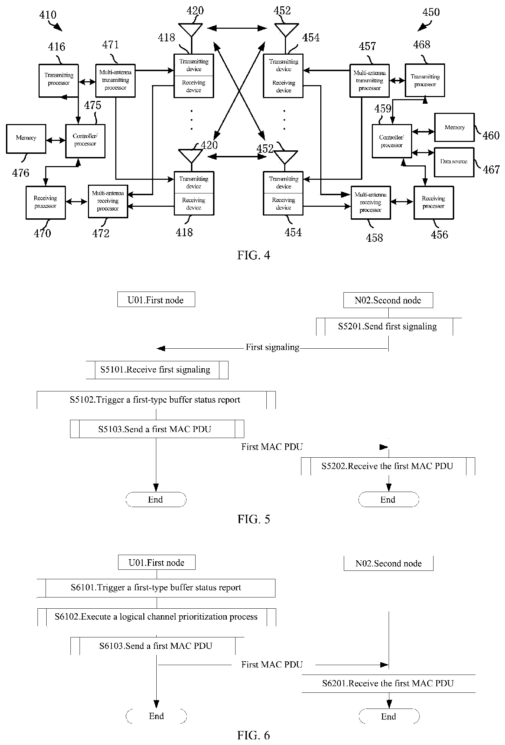

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in a time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for the retransmission of the lost packet, and for signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 comprises: at least one processor and at least one memory, wherein the at least one memory comprises a computer program code; the at least one memory and the computer program code are configured to be used with the at least one processor, and the first communication device 450 at least: triggers one first-type buffer status report; after a behavior triggers a first-type buffer status report, sending a first MAC PDU, wherein the first MAC PDU comprises at least a first MAC CE; the first MAC CE indicates K1 pieces of data volume information; the K1 pieces of data volume information are respectively for K1 objects; wherein first data volume information is one piece of data volume information among the K1 pieces of data volume information, a first object is one of the K1 objects, and the first data volume information is for the first object; and the position of the first data volume information in the first MAC CE depends on temporal information of at least one of the K1 objects.

As one embodiment, the first communication device 450 comprises: a memory storing a computer-readable instruction program, the computer-readable instruction program generates actions when executed by at least one processor, and the actions comprise: triggering one first-type buffer status report; after a behavior triggers a first-type buffer status report, sending a first MAC PDU, wherein the first MAC PDU comprises at least a first MAC CE; the first MAC CE indicates K1 pieces of data volume information; the K1 pieces of data volume information are respectively for K1 objects; wherein first data volume information is one piece of data volume information among the K1 pieces of data volume information, a first object is one of the K1 objects, and the first data volume information is for the first object; and the position of the first data volume information in the first MAC CE depends on temporal information of at least one of the K1 objects.

As one embodiment, the second communication device 410 comprises: at least one processor and at least one memory, wherein the at least one memory comprises a computer program code; and the at least one memory and the computer program code are configured to be used with the at least one processor. The second communication device 410 at least: receives a first MAC PDU, the first MAC PDU comprises at least a first MAC CE, the first MAC CE indicates K1 pieces of data volume information, and the K1 pieces of data volume information are respectively for K1 objects, wherein after one first-type buffer status report is triggered, the first MAC PDU is sent; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects.

As one embodiment, the second communication device 410 comprises: a memory storing a computer-readable instruction program, the computer-readable instruction program generates actions when executed by at least one processor, the actions comprise: receiving a first MAC PDU, the first MAC PDU comprises at least a first MAC CE, the first MAC CE indicates K1 pieces of data volume information, and the K1 pieces of data volume information are respectively for K1 objects, wherein after one first-type buffer status report is triggered, the first MAC PDU is sent; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects.

As one embodiment, at least one of the antenna 452, the receiving device 454, the receiving processor 456, and the controller/processor 459 is used for triggering a first-type buffer status report.

As one embodiment, at least one of the antenna 452, the receiving device 454, the receiving processor 456, and the controller/processor 459 is used for triggering a second-type buffer status report.

As one embodiment, at least one of the antenna 452, the receiving device 454, the receiving processor 456, and the controller/processor 459 is used for cancelling the second-type buffer status report.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, at least one of the antenna 452, the transmitting device 454, the transmitting processor 468, and the controller/processor 459 is used for sending the first MAC PDU.

As one embodiment, at least one of the antenna 420, the receiving device 418, the receiving processor 470, and the controller/processor 475 is used for receiving the first MAC PDU.

As one embodiment, at least one of the antenna 452, the transmitting device 454, the transmitting processor 468, and the controller/processor 459 is used for sending the first MAC CE.

As one embodiment, at least one of the antenna 420, the receiving device 418, the receiving processor 470, and the controller/processor 475 is used for receiving the first MAC CE.

As one embodiment, at least one of the antenna 452, the transmitting device 454, the transmitting processor 468, and the controller/processor 459 is used for sending a second signaling set.

As one embodiment, at least one of the antenna 420, the receiving device 418, the receiving processor 470, and the controller/processor 475 is used for receiving the second signaling set.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the second communication device 410 is one base station device.

### Embodiment 5

Embodiment 5 illustrates a radio signal transmission flow chart according to one embodiment of the present application, as shown in FIG. 5. It is particularly explained that the order in the present example does not limit the signal transmission order and the implementation order in the present application.

For **a first node U01,** in step S5101, first signaling is received, the first signaling indicating a first uplink grant; in step S5102, a first-type buffer status report is triggered; and in step S5103, after a behavior triggers one first-type buffer status report, a first MAC PDU is sent, the first MAC PDU comprises at least a first MAC CE, the first MAC CE indicates K1 pieces of data volume information, and the K1 pieces of data volume information are respectively for K1 objects.

For **a second node N02,** in step S5201, the first signaling is sent; and in step S5202, the first MAC PDU is received.

In Embodiment 5, first data volume information is one of the K1 pieces of data volume information, a first object is one of the K1 objects, and the first data volume information is for the first object; the position of the first data volume information in the first MAC CE depends on temporal information of at least one of the K1 objects; only when a first uplink grant cannot accommodate data volume information of K2 objects, the position of the first data volume information in the first MAC CE depends on the temporal information of the at least one of the K1 objects; the K2 objects have data available, any of the K1 objects belongs to the K2 objects, and K1 is less than K2; and the first MAC PDU is sent on the first uplink grant.

As one embodiment, the first node U01 is one piece of user equipment.

As one embodiment, the first node U01 is one base station device.

As one embodiment, the first node U01 is one piece of relay equipment.

As one embodiment, the second node N02 is one base station device.

As one embodiment, the second node N02 is one piece of user equipment.

As one embodiment, the second node N02 is one piece of relay equipment.

As one embodiment, the first node U01 is one piece of user equipment and the second node N02 is one base station device.

As one embodiment, the first node U01 is one piece of user equipment and the second node N02 is one piece of relay equipment.

As one embodiment, the first node U01 is one piece of user equipment and the second node N02 is one piece of user equipment.

As one embodiment, the first node U01 is one base station device, and the second node N02 is one base station device.

As one embodiment, the first node U01 is one piece of relay equipment, and the second node N02 is one base station device.

As one embodiment, the first MAC CE does not comprise a data volume information field for any object other than the K1 objects among the K2 objects.

As one embodiment, the first MAC CE does not indicate the data volume information of any object other than the K1 objects among the K2 objects.

As one embodiment, the first signaling comprises an RRC message.

As one embodiment, the first signaling is the RRC message.

As one embodiment, the first signaling comprises the MAC CE.

As one embodiment, the first signaling is the MAC CE.

As one embodiment, the first signaling is one piece of DCI (Downlink Control Information, downlink control information), and the first uplink grant is dynamically received on a PDCCH (Physical Downlink Control Channel).

As one embodiment, the first signaling comprises DCI.

As one embodiment, the first uplink grant is received in one random access response (RAR), and the first signaling comprises the one random access response.

As one embodiment, the first uplink grant is received in one fallbackRAR, and the first signaling comprises the one fallbackRAR.

As one embodiment, the first uplink grant is configured semi-persistently by RRC, and the first signaling comprises the RRC message.

As one embodiment, the first uplink grant is determined according to a PUSCH resource associated with an MSGA, and the first signaling comprises the RRC message.

As one embodiment, the phrase of the first uplink grant being unable to accommodate data volume information of K2 objects comprises: the first uplink grant cannot accommodate the data volume information field for the K2 objects.

As one embodiment, the phrase of the first uplink grant being unable to accommodate data volume information of K2 objects comprises: as a result of a logical channel prioritization process, a size of the first uplink grant cannot accommodate the data volume information field for the K2 objects.

As one embodiment, the phrase of the first uplink grant being unable to accommodate the data volume information of K2 objects comprises: the first MAC CE generated according to the first uplink grant cannot accommodate the data volume information of the K2 objects.

As one embodiment, the phrase of the first uplink grant being unable to accommodate the data volume information of K2 objects comprises: the number of data volume information fields accommodated by the first MAC CE generated according to the first uplink grant is less than K2.

As one embodiment, the phrase of the first uplink grant being unable to accommodate the data volume information of K2 objects comprises: the first MAC CE is in a truncated format; and the first uplink grant being unable to accommodate the data volume information of the K2 objects is used for determining that the first MAC CE is in the truncated format.

As one embodiment, the first uplink grant cannot accommodate the data volume information of the K2 objects.

As one embodiment, the first uplink grant cannot accommodate the data volume information of any object other than the K1 objects among the K2 objects.

As one embodiment, the first uplink grant can only accommodate the data volume information of the K1 objects.

As one embodiment, the first uplink grant can only accommodate the data volume information of the K1 objects among the K2 objects.

As one embodiment, the first uplink grant can accommodate one BSR MAC CE and a subheader of the one BSR MAC CE.

As one embodiment, as a result of the logical channel prioritization process, the first uplink grant can accommodate one BSR MAC CE and the subheader of the one BSR MAC CE.

As one embodiment, after the logical channel prioritization process, it is determined that the size of the first uplink grant cannot accommodate the data volume information of the K2 objects.

As one embodiment, in the logical channel prioritization process, it is determined that the size of the first uplink grant cannot accommodate the data volume information of the K2 objects.

As one embodiment, K2 is not greater than Q1.

As one embodiment, the maximum value of K2 is Q1.

As one embodiment, when the logical channel prioritization process is executed, the K2 objects have data available.

As one embodiment, when the first MAC PDU is assembled, the K2 objects have data available.

As one embodiment, before the first MAC PDU is assembled, the K2 objects have data available.

As one embodiment, the K1 objects are determined among the K2 objects.

As one embodiment, the K1 objects belong to the K2 objects.

As one embodiment, the K1 objects are one subset of the K2 objects.

As one embodiment, the K1 objects are the first K1 objects among the K2 objects sorted according to a descending order of temporal information.

As one embodiment, the K1 objects are the first K1 objects among the K2 objects sorted according to an ascending order of temporal information.

As one embodiment, the K1 objects are the first K1 objects among the K2 objects sorted according to the descending order of temporal information and a descending order of LCG IDs.

As one embodiment, the K1 objects are the first K1 objects among the K2 objects sorted according to the ascending order of temporal information and the descending order of LCG IDs.

As one embodiment, the K1 objects are the first K1 objects among the K2 objects sorted according to the ascending order of temporal information and a descending order of priorities.

As one embodiment, the K1 objects are the first K1 objects among the K2 objects sorted according to the descending order of temporal information and the descending order of priorities.

As one embodiment, the K1 objects are the first K1 objects among the K2 objects sorted according to the ascending order of temporal information, the descending order of priorities and the descending order of LCG IDs.

As one embodiment, the K1 objects are the first K1 objects among the K2 objects sorted according to the descending order of temporal information, the descending order of priorities and the descending order of LCG IDs.

As one embodiment, the data available comprises available data.

As one embodiment, the data available comprises data available to a MAC entity.

As one embodiment, the data available comprises data buffered in a PDCP entity.

As one embodiment, the data available comprises data buffered in an RLC entity.

As one embodiment, the data available comprises expected data.

As one embodiment, the data available comprises data expected by the MAC entity.

As one embodiment, the data available comprises data expected by the PDCP entity.

As one embodiment, the data available comprises data expected by the RLC entity.

As one embodiment, the first uplink grant is used for carrying the first MAC PDU.

As one embodiment, a physical layer is indicated to generate a transmission for the first MAC PDU according to the first uplink grant.

As one embodiment, one TB generated according to the first uplink grant comprises all or parts of the information of the first MAC PDU.

### Embodiment 6

Embodiment 6 illustrates a radio signal transmission flow chart according to another embodiment of the present application, as shown in FIG. 6. It is particularly explained that the order in the present example does not limit the signal transmission order and the implementation order in the present application.

For **a first node U01,** in step S6101, a first-type buffer status report is triggered; in step S6102, before a first MAC PDU is sent, a logical channel prioritization process is executed; and in step S6103, after a behavior triggers one first-type buffer status report, the first MAC PDU is sent, the first MAC PDU comprises at least a first MAC CE, the first MAC CE indicates K1 pieces of data volume information, and the K1 pieces of data volume information are respectively for K1 objects.

For **a second node N02,** in step S6201, the first MAC PDU is received.

In Embodiment 6, first data volume information is one of the K1 pieces of data volume information, a first object is one of the K1 objects, and the first data volume information is for the first object; the order of the first MAC CE in the logical channel prioritization process is not lower than the order of the MAC CE for regular BSR in the logical channel prioritization process.

As one embodiment, the position of the first data volume information in the first MAC CE depends on temporal information of at least one of the K1 objects.

As one embodiment, the position of the first data volume information in the first MAC CE depends on an order of an identifier of each of the K1 objects.

As one embodiment, the position of the first data volume information in the first MAC CE depends on an LCG ID of each of the K1 objects.

As one embodiment, the position of the first data volume information in the first MAC CE depends on a size of data volume of each of the K1 objects.

As one embodiment, a logical channel prioritization process is executed after first signaling is received.

As one embodiment, the logical channel prioritization process is executed before the first MAC PDU is assembled.

As one embodiment, the logical channel prioritization process is executed when one new transmission is processed.

As one embodiment, the logical channel prioritization process is executed when a first uplink grant schedules one new transmission.

As one embodiment, the first uplink grant is used for scheduling one new transmission.

As one embodiment, the logical channel prioritization process comprises: selection of logical channels.

As one embodiment, the logical channel prioritization process comprises: resource allocation.

As one embodiment, the logical channel prioritization process depends on an order in which the logical channels are prioritized.

As one embodiment, the resource allocation depends on the order in which the logical channels are prioritized.

As one embodiment, the resource allocation depends on Bj of the logical channels.

As one embodiment, the resource allocation is performed in a descending order in which the logical channels are prioritized.

As one embodiment, the order of one logical channel in the logical channel prioritization process comprises: the order in which one logical channel is prioritized.

As one embodiment, the order of one MAC CE in the logical channel prioritization process comprises: the order of the logical channel corresponding to the one MAC CE in the logical channel prioritization process.

As one embodiment, the order of one MAC CE in the logical channel prioritization process comprises: the order in which the logical channels corresponding to the one MAC CE are prioritized.

As one embodiment, the order of the first MAC CE in the logical channel prioritization process is higher than the order of the MAC CE for regular BSR or periodic BSR in the logical channel prioritization process.

As one embodiment, the order of the first MAC CE in the logical channel prioritization process is the same as the order of the MAC CE for the regular BSR or the periodic BSR in the logical channel prioritization process.

As one embodiment, the order of the first MAC CE in the logical channel prioritization process is higher than the order of the MAC CE for the SL-BSR prioritized in the logical channel prioritization process.

As one embodiment, the order of the first MAC CE in the logical channel prioritization process is lower than the order of the MAC CE for the SL-BSR prioritized in the logical channel prioritization process.

As one embodiment, the order of the first MAC CE in the logical channel prioritization process is higher than the order of the MAC CE for a timing advance report in the logical channel prioritization process.

As one embodiment, the order of the first MAC CE in the logical channel prioritization process is lower than the order of the MAC CE for the timing advance report in the logical channel prioritization process.

As one embodiment, the order of the first MAC CE in the logical channel prioritization process is higher than the order of the MAC CE for a LBT (Listen Before Talk) in the logical channel prioritization process.

As one embodiment, the order of the first MAC CE in the logical channel prioritization process is lower than the order of the MAC CE for the LBT in the logical channel prioritization process.

As one embodiment, the order of the first MAC CE in the logical channel prioritization process is higher than the order of the MAC CE for the regular BSR or the periodic BSR in the logical channel prioritization process, and is lower than the order of the MAC CE for the SL-BSR prioritized in the logical channel prioritization process.

As one embodiment, the order of the first MAC CE in the logical channel prioritization process is higher than the order of the MAC CE for the SL-BSR prioritized in the logical channel prioritization process, and is lower than the order of the MAC CE for the timing advance report in the logical channel prioritization process.

As one embodiment, the order of the first MAC CE in the logical channel prioritization process is higher than the order of the MAC CE for the timing advance report in the logical channel prioritization process, and is lower than the order of the MAC CE for the LBT in the logical channel prioritization process.

As one embodiment, the order of the first MAC CE in the logical channel prioritization process is higher than the order of the MAC CE for the LBT in the logical channel prioritization process, and is lower than the order of the MAC CE for sidelink configured grant confirmation in the logical channel prioritization process.

As one embodiment, a first MAC entity of the first node U01 executes the logical channel prioritization process.

### Embodiment 7

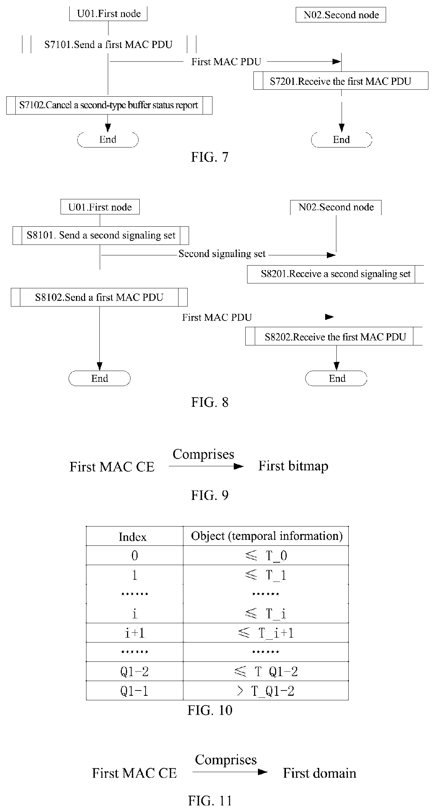

Embodiment 7 illustrates a radio signal transmission flow chart according to yet another embodiment of the present application, as shown in FIG. 7. It is particularly explained that the order in the present example does not limit the signal transmission order and the implementation order in the present application.

For **a first node U01,** in step S7101, a first MAC PDU is sent, the first MAC PDU comprises at least a first MAC CE, the first MAC CE indicates K1 pieces of data volume information, and the K1 pieces of data volume information are respectively for K1 objects; and in step S7102, a second-type buffer status report is cancelled in response to the first MAC PDU being sent.

For **a second node N02,** in step S7201, the first MAC PDU is received.

In Embodiment 7, first data volume information is one of the K1 pieces of data volume information, a first object is one of the K1 objects, and the first data volume information is for the first object; the second-type buffer status report is triggered before the first MAC PDU is sent, and the second-type buffer status report comprises at least one of regular BSR, periodic BSR, or padding BSR.

As one embodiment, the position of the first data volume information in the first MAC CE depends on temporal information of at least one of the K1 objects.

As one embodiment, the position of the first data volume information in the first MAC CE depends on an order of an identifier of each of the K1 objects.

As one embodiment, the position of the first data volume information in the first MAC CE depends on an LCG ID of each of the K1 objects.

As one embodiment, the position of the first data volume information in the first MAC CE depends on a size of data volume of each of the K1 objects.

As one embodiment, before a behavior triggers one first-type buffer status report, at least one second-type buffer status report is triggered.

As one embodiment, after the behavior triggers one first-type buffer status report, at least one second-type buffer status report is triggered.

As one embodiment, the first-type buffer status report has precedence over the second-type buffer status report.

As one embodiment, the first-type buffer status report shall have precedence over the second-type buffer status report.

As one embodiment, the first-type buffer status report having precedence over the second-type buffer status report is used for determining that the first MAC PDU comprises the first MAC CE.

As one embodiment, the first-type buffer status report is different from any of the second-type buffer status reports.

As one embodiment, the first-type buffer status report is different from the second-type buffer status report.

As one embodiment, the first-type buffer status report is the second-type buffer status report.

As one embodiment, the phrase of the second-type buffer status report being triggered before the first MAC PDU is sent means: the second-type buffer status report is triggered before the first MAC PDU is assembled.

As one embodiment, the phrase of the second-type buffer status report being triggered before the first MAC PDU is sent means: the second-type buffer status report is triggered before a physical layer is indicated to send the first MAC PDU.

As one embodiment, before the first MAC PDU is sent, at least one second-type buffer status report is triggered.

As one embodiment, the second-type buffer status report comprises regular BSR, periodic BSR, and padding BSR.

As one embodiment, the second-type buffer status report comprises the regular BSR and the periodic BSR.

As one embodiment, the second-type buffer status report is any one of the regular BSR or the periodic BSR.

As one embodiment, the second-type buffer status report is any one of the regular BSR, the periodic BSR, or the padding BSR.

As one embodiment, the second-type buffer status report is the regular BSR or the periodic BSR or the padding BSR.

As one embodiment, the behavior cancelling the second-type buffer status report comprises: the second-type buffer status report should be cancelled.

As one embodiment, the behavior cancelling the second-type buffer status report comprises: the second-type buffer status report shall be cancelled.

As one embodiment, the behavior cancelling the second-type buffer status report comprises: cancelling all triggered second-type buffer status reports.

As one embodiment, the behavior cancelling the second-type buffer status report comprises: cancelling each triggered second-type buffer status report.

As one embodiment, the behavior cancelling the second-type buffer status report comprises: cancelling at least one second-type buffer status report triggered before the first MAC PDU is sent.

As one embodiment, the first-type buffer status report and the second-type buffer status report are cancelled in response to the first MAC PDU being sent.

As one embodiment, a first MAC entity cancels the second-type buffer status report.

As one embodiment, in response to the first MAC PDU being sent, only when the first MAC CE comprises a buffer status of the last event that triggers the second-type buffer status report until (before) the first MAC PDU is assembled, the second-type buffer status report is cancelled.

As one embodiment, in response to the first MAC PDU being sent, only when the first MAC CE comprises the buffer status of the last event that triggers one piece of BSR until (before) the first MAC PDU is assembled, the second-type buffer status report is cancelled.

As one embodiment, the first MAC entity of the first node U01 cancels the second-type buffer status report.

As one embodiment, when UL data, for a logical channel which belongs to an LCG, becomes available to the MAC entity, and this UL data belongs to a logical channel with higher priority than the priority of any logical channel containing available UL data which belongs to any LCG, one piece of regular BSR is triggered.

As one embodiment, when retxBSR-Timer expires and at least one of the logical channels which belong to an LCG contains UL data, the regular BSR is triggered.

As one embodiment, when UL data, for a logical channel which belongs to an LCG, becomes available to the MAC entity, and none of the logical channels which belong to an LCG contains any available UL data, the regular BSR is triggered.

As one embodiment, the uplink data that triggers the first-type buffer status report does not belong to any data packet set.

As one embodiment, the uplink data that triggers the first-type buffer status report comprises data packets of at least one data packet set.

As one embodiment, the uplink data that triggers the first-type buffer status report does not comprise data packets of any data packet set.

As one embodiment, when UL resources are allocated and number of padding bits is equal to or larger than the size of the buffer status report MAC CE plus its subheader, the padding BSR is triggered.

As one embodiment, when the periodicBSR- Timer expires, one periodic BSR is triggered.

### Embodiment 8

Embodiment 8 illustrates a radio signal transmission flow chart according to still another embodiment of the present application, as shown in FIG. 8. It is particularly explained that the order in the present example does not limit the signal transmission order and the implementation order in the present application.

For **a first node U01,** in step S8101, a second signaling set is sent, the second signaling set comprises temporal information of at least one of the K1 objects; and in step S8102, a first MAC PDU is sent, the first MAC PDU comprises at least a first MAC CE, the first MAC CE indicates K1 pieces of data volume information, and the K1 pieces of data volume information are respectively for K1 objects.

For **a second node N02,** in step S8201, the second signaling set is received; and in step S8202, the first MAC PDU is received.

In Embodiment 8, first data volume information is one of the K1 pieces of data volume information, the first object is one of the K1 objects, and the first data volume information is for the first object.

As one embodiment, the position of the first data volume information in the first MAC CE depends on temporal information of at least one of the K1 objects.

As one embodiment, the position of the first data volume information in the first MAC CE depends on an order of an identifier of each of the K1 objects.

As one embodiment, the position of the first data volume information in the first MAC CE depends on an LCG ID of each of the K1 objects.

As one embodiment, the position of the first data volume information in the first MAC CE depends on a size of data volume of each of the K1 objects.

As one embodiment, the step S8102 comprises the step S8101, and the step S8202 comprises the step S8201.

As one embodiment, the step S8102 is after the step S8101.

As one embodiment, the step S8102 is before the step S8101.

As one embodiment, the first MAC CE comprises at least K1 data volume information fields and the second signaling set.

As one embodiment, the first MAC CE comprises at least the K1 data volume information fields, the second signaling set and a reserved field.

As one embodiment, the first MAC CE consists of the K1 data volume information fields and the second signaling set.

As one embodiment, the first MAC CE consists of the K1 data volume information fields, the second signaling set and the reserved field.

As one embodiment, the second signaling set belongs to the first MAC CE.

As one sub-embodiment of this embodiment, the second signaling set is one field in the first MAC CE.

As one sub-embodiment of this embodiment, the second signaling set is a plurality of fields in the first MAC CE.

As one sub-embodiment of this embodiment, the first MAC CE comprises the second signaling set.

As one embodiment, the second signaling set does not belong to the first MAC CE.

As one sub-embodiment of this embodiment, the second signaling set comprises at least one RRC message.

As one sub-embodiment of this embodiment, the second signaling set is one RRC message.

As one sub-embodiment of this embodiment, the second signaling set comprises at least one RRC field.

As one sub-embodiment of this embodiment, the second signaling set comprises at least one RRC IE.

As one sub-embodiment of this embodiment, the second signaling set is transmitted by a DCCH (Dedicated Control Channel).

As one sub-embodiment of this embodiment, the second signaling set is transmitted by an SRB1 (Signaling Radio Bearer 1).

As one sub-embodiment of this embodiment, the second signaling set is transmitted by an SRB3 (Signaling Radio Bearer 3).

As one sub-embodiment of this embodiment, the second signaling set comprises a UEAssistanceInformation message.

As one sub-embodiment of this embodiment, the second signaling set comprises at least one RRC field in the UEAssistanceInformation message.

As one sub-embodiment of this embodiment, the second signaling set comprises at least one MAC CE.

As one sub-embodiment of this embodiment, the second signaling set is one MAC CE.

As one sub-embodiment of this embodiment, the second signaling set belongs to the first MAC PDU.

As one sub-embodiment of this embodiment, the second signaling set does not belong to the first MAC PDU.

As one sub-embodiment of this embodiment, the second signaling set and the first MAC PDU are sent simultaneously.

As one sub-embodiment of this embodiment, the second signaling set and the first MAC PDU are not sent simultaneously.

As one embodiment, the second signaling set is an uplink signaling.

As one embodiment, the second signaling set is a sidelink signaling.

As one embodiment, the second signaling set is transmitted by a UL-SCH resource.

As one embodiment, the second signaling set is transmitted by an SL-SCH resource.

As one embodiment, the second signaling set comprises temporal information of each of the K1 objects.

As one embodiment, the second signaling set comprises temporal information of an object indicated with temporal information among the K1 objects.

As one embodiment, the second signaling set comprises temporal information of an object with temporal information among the K1 objects.

As one embodiment, the second signaling set comprises temporal information of only one of the K1 objects.

As one embodiment, the second signaling set comprises a minimum value of the temporal information of the K1 objects.

As one embodiment, the second signaling set comprises a maximum value of the temporal information of the K1 objects.

As one embodiment, the second signaling set comprises temporal information of each of the K1 objects.

As one embodiment, the second signaling set does not comprise the temporal information of at least one of the K1 objects.

As one embodiment, the second signaling set comprises the temporal information of each of the K2 objects with available data.

As one embodiment, the second signaling set comprises the temporal information of each object with available data and indicated with the temporal information.

As one embodiment, the second signaling set comprises at least one temporal information field, and each temporal information field indicates one piece of temporal information.

As one embodiment, the second signaling set comprises no more than K1 temporal information fields.

As one embodiment, the second signaling set comprises K1 temporal information fields.

As one embodiment, the second signaling set comprises one set of K1 temporal information fields.

### Embodiment 9

Embodiment 9 illustrates a schematic diagram in which a first MAC CE comprises a first bitmap according to one embodiment of the present application, as shown in FIG. 9.

In Embodiment 9, the first MAC CE comprises the first bitmap, the first bitmap consists of K3 bits, and the K3 bits correspond to K3 objects, respectively; and K1 bits among the K3 bits are set as 1, and the K1 bits and the K1 objects are in one-to-one correspondence.

As one embodiment, the first MAC CE comprises at least K1 data volume information fields and the first bitmap.

As one embodiment, the first MAC CE comprises at least K1 data volume information fields, the first bitmap and a reserved field.

As one embodiment, the first MAC CE comprises at least the K1 data volume information fields, the first bitmap and a second signaling set.

As one embodiment, the first MAC CE comprises at least the K1 data volume information fields, the first bitmap, the second signaling set and the reserved field.

As one embodiment, the first MAC CE consists of the K1 data volume information fields and the first bitmap.

As one embodiment, the first MAC CE consists of the K1 data volume information fields, the second signaling set and the first bitmap.

As one embodiment, the first MAC CE consists of the K1 data volume information fields and the first bitmap.

As one embodiment, the first MAC CE consists of the K1 data volume information fields, the first bitmap and the reserved field.

As one embodiment, the first MAC CE consists of the K1 data volume information fields, the second signaling set, the first bitmap and the reserved field.

As one embodiment, any bit in the first bitmap indicates one object.

As one embodiment, any bit in the first bitmap indicates an index of one object.

As one embodiment, any bit in the first bitmap corresponds to the index of one object.

As one embodiment, at least one bit in the first bitmap is reserved.

As one embodiment, the first bitmap is one bitmap.

As one embodiment, the first bitmap is located at the highest order of the first MAC CE.

As one embodiment, the first bitmap is K3 bits at the highest order of the first MAC CE.

As one embodiment, K3 is a positive integer multiple of 8.

As one sub-embodiment of this embodiment, K3 is 8 or 16 or 32 or 64.

As one embodiment, K3 is 7.

As one embodiment, K3 is 15.

As one embodiment, one bit in the first bitmap is one MAC field.

As one embodiment, one bit in the first bitmap is one LCGᵢ field.

As one embodiment, any bit in the first bitmap indicates whether the first MAC CE comprises data volume information for an object indicated by any bit.

As one sub-embodiment of this embodiment, one bit in the first bitmap is set as 1 to indicate that the first MAC CE comprises the data volume information for the object indicated by the one bit.

As one sub-embodiment of this embodiment, one bit in the first bitmap is set as 0 to indicate that the first MAC CE does not comprise the data volume information for the object indicated by the one bit.

As one embodiment, any bit in the first bitmap indicates whether the first MAC CE comprises the data volume information field for the object indicated by any bit.

As one sub-embodiment of this embodiment, one bit in the first bitmap is set as 1 to indicate that the data volume information for the object indicated by the one bit is reported.

As one sub-embodiment of this embodiment, one bit in the first bitmap is set as 0 to indicate that the data volume information for the object indicated by the one bit is not reported.

As one embodiment, any bit in the first bitmap indicates whether the object indicated by any bit has data available.

As one sub-embodiment of this embodiment, one bit in the first bitmap is set as 1 to indicate that the object indicated by the one bit has data available.

As one sub-embodiment of this embodiment, one bit in the first bitmap is set as 0 to indicate that the object indicated by the one bit has no data available.

As one embodiment, any bit in the first bitmap indicates whether the data volume information of the object indicated by any bit is reported.

As one sub-embodiment of this embodiment, one bit in the first bitmap is set as 1 to indicate that the data volume information for the object indicated by the one bit is reported.

As one sub-embodiment of this embodiment, one bit in the first bitmap is set as 0 to indicate that the data volume information for the object indicated by the one bit is not reported.

As one embodiment, K2 of the K3 bits are set as 1, and the K2 bits and the K2 objects are in one-to-one correspondence.

As one sub-embodiment of this embodiment, any bit other than the K2 of the K3 bits is set as 0.

As one sub-embodiment of this embodiment, the data volume information fields of the K1 of the K2 objects are reported.

As one sub-embodiment of this embodiment, the objects corresponding to the K2 of the K3 bits are indicated to have data available.

As one embodiment, any bit other than the K1 of the K3 bits is set as 0.

As one sub-embodiment of this embodiment, the data volume information fields of the objects corresponding to the K1 of the K3 bits are reported.

As one sub-embodiment of this embodiment, the objects corresponding to the K1 of the K3 bits are indicated to have data available.

As one embodiment, the size of the first bitmap is variable.

As one embodiment, the size of the first bitmap is fixed.

### Embodiment 10

Embodiment 10 illustrates a schematic diagram of a first table according to one embodiment of the present application, as shown in FIG. 10. In the attached FIG. 10, a first column of the first table comprises indexes of Q1 objects, and a second column of the first table comprises Q1 objects, wherein the Q1 objects are Q1 pieces of temporal information; and it is particularly explained that this example does not limit a size of the first table, and this example does not limit the implementation of the Q1 objects.

In Embodiment 10, any bit in the first bitmap corresponds to one index in the first table, the first table comprises Q1 indexes and at most Q1 objects, and each object in the at most Q1 objects corresponds to one of the Q1 indexes; and each of the at most Q1 objects is one piece of temporal information.

As one embodiment, the i-th bit in the first bitmap corresponds to an index i-1 in the first table; and i is not less than 1, and the i is not greater than the K3.

As one embodiment, the K3 bits in the first bitmap correspond to an index 0, an index 1, ..., an index i, an index i+1, ..., an index K3-2, and an index K3-1 in the first table, respectively.

As one embodiment, the first table is predefined.

As one embodiment, the phrase of any bit in the first bitmap corresponding to one index in the first table comprises: any bit in the K3 bits corresponds to one index in the first table.

As one embodiment, the phrase of any bit in the first bitmap corresponding to one index in the first table comprises: the first bitmap and the indexes in the first table are in one-to-one correspondence.

As one embodiment, the phrase of any bit in the first bitmap corresponding to one index in the first table comprises: the first bitmap and valid indexes in the first table are in one-to-one correspondence, and the valid index refers to an unreserved index in the first table.

As one embodiment, in the first table, the temporal information corresponding to an object #0 ≤T_0, the temporal information corresponding to an object #1 ≤T_1... the temporal information corresponding to an object #i ≤T_i, the temporal information corresponding to an object #i+1 ≤T_i+1... the temporal information corresponding to object #Q1-2 ≤T_Q1-2, and the temporal information corresponding to object #Q1-1 >T_Q1-2.

As one embodiment, in the first table, the temporal information corresponding to the object #0 ≤T_0, T_0<the temporal information corresponding to the object #1 ≤T_1... T_i-1< the temporal information corresponding to the object #i ≤T_i, T_i<the temporal information corresponding to the object #i+1 ≤T_i+1... T_Q1-3<the temporal information corresponding to the object #Q1-2 ≤T_Q1-2, and the temporal information corresponding to the object #Q1-1 >T_Q1-2.

As one embodiment, T_0 < T_1... < T_i < T_i+1... < T_Q1-2.

As one embodiment, in the first table, the temporal information corresponding to an object #0 ≤T_0, the temporal information corresponding to an object #1 ≤T_1... the temporal information corresponding to an object #i ≤T_i, the temporal information corresponding to an object #i+1 ≤T_i+1... the temporal information corresponding to object #Q1-3 ≤T_Q1-3, and the temporal information corresponding to object #Q1-2 >T_Q1-3.

As one embodiment, in the first table, the temporal information corresponding to the object #0 ≤T_0, T_0<the temporal information corresponding to the object #1 ≤T_1... T_i-1< the temporal information corresponding to the object #i ≤T_i, T_i<the temporal information corresponding to the object #i+1 ≤T_i+1... T_Q1-4<the temporal information corresponding to the object #Q1-3 ≤T_Q1-3, and the temporal information corresponding to the object #Q1-2 >T_Q1-3.

As one embodiment, T_0 < T_1... < T_i < T_i+1... < T_Q1-3.

As one embodiment, the at most Q1 objects are Q1 objects; and each index in the first table is not reserved.

As one embodiment, the at most Q1 objects are less than Q1 objects; and at least one index in the first table is reserved.

As one embodiment, the at most Q1 objects are K3 objects, and the K3 is less than the Q1; and (Q1-K3) indexes in the first table are reserved.

As one embodiment, the Q1 is equal to K3.

As one embodiment, the Q1 is greater than K3.

As one embodiment, the Q1 is less than K3.

As one embodiment, the Q1 is equal to 8.

As one embodiment, the Q1 is equal to 16.

As one embodiment, the Q1 is equal to 32.

As one embodiment, the Q1 is equal to 64.

As one embodiment, each of the at most Q1 objects is indicated by one of the Q1 indexes.

As one embodiment, each of the at most Q1 objects is uniquely indicated by one of the Q1 indexes.

As one embodiment, each of the at most Q1 objects and the at most Q1 of the Q1 indexes are in one-to-one correspondence.

As one embodiment, each of the Q1 objects and the Q1 indexes are in one-to-one correspondence.

As one embodiment, each of the K3 objects and the K3 of the Q1 indexes are in one-to-one correspondence.

As one embodiment, any object in the at most Q1 objects is one piece of temporal information.

As one embodiment, the K1 object is one of the at most Q1 objects.

### Embodiment 11

Embodiment 11 illustrates a schematic diagram in which a first MAC CE comprises a first domain according to one embodiment of the present application, as shown in FIG. 11.

In Embodiment 11, the first MAC CE comprises the first domain, and the first domain is used for indicating whether the first MAC CE comprises temporal information for a first object.

As one embodiment, the first domain is set as a first value to indicate that the first MAC CE comprises the temporal information for the first object; and the first domain is set as a second value to indicate that the first MAC CE does not comprise the temporal information for the first object.

As one embodiment, the phrase of the first domain being used for indicating whether the first MAC CE comprises temporal information for the first object comprises: the first domain is used for indicating whether the first MAC CE comprises a second domain, and the second domain indicates the temporal information for the first object.

As one embodiment, the first domain is set as the first value to indicate that the first MAC CE comprises the second domain; and the first domain is set as the second value to indicate that the first MAC CE does not comprise the second domain.

As one embodiment, the first MAC CE not comprising the second domain means: a bit corresponding to the second domain is reserved.

As one sub-embodiment of this embodiment, any bit corresponding to the second domain is set as 0.

As one sub-embodiment of this embodiment, any bit corresponding to the second domain is set as 1.

As one embodiment, the first domain is one MAC field in the first MAC CE.

As one embodiment, the first domain occupies 2 bits.

As one embodiment, the first domain occupies 1 bit.

As one embodiment, the first value and the second value are not equal.

As one embodiment, the first value is 1, and the second value is 0.

As one embodiment, the first value is 0, and the second value is 1.

As one embodiment, the first domain, the second domain, and a first data volume information field occupy 2 consecutive octets.

As one embodiment, the first domain, the second domain, and a first data volume information field occupy 3 consecutive octets.

As one embodiment, the first domain, the second domain, the first data volume information field, and at least one reserved field occupy 2 consecutive octets.

As one embodiment, the first domain, the second domain, the first data volume information field, and at least one reserved field occupy 3 consecutive octets.

As one embodiment, the first domain is located before the first data volume information field.

As one embodiment, the first domain is located before the second domain.

As one embodiment, the first domain is located before the first data volume information field, and the first domain is located before the second domain.

As one embodiment, at least one reserved bit is included between the first domain and the second domain.

As one embodiment, no reserved bit is included between the first domain and the second domain.

As one embodiment, at least one reserved bit is included between the second domain and the first data volume information field.

As one embodiment, no reserved bit is included between the second domain and the first data volume information field.

As one embodiment, at least one reserved bit is included between the first domain and the first data volume information field.

As one embodiment, no reserved bit is included between the first domain and the first data volume information field.

As one embodiment, the first data volume information field closely follows the second domain, and the second domain closely follows the first domain.

As one embodiment, the first object is any of the K1 objects.

As one embodiment, the first object is one object with the smallest temporal information among the K1 objects.

As one embodiment, the first object is one object with the largest temporal information among the K1 objects.

### Embodiment 12

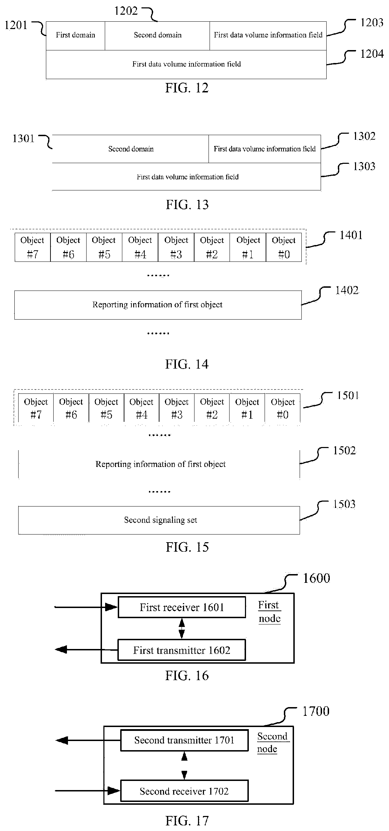

Embodiment 12 illustrates a schematic diagram of reporting information of a first object according to one embodiment of the present application, as shown in FIG. 12. A block 1201 is a first domain, a block 1202 is a second domain, and blocks 1203 and 1204 are first data volume information fields.

In Embodiment 12, a first MAC CE comprises the reporting information of the first object, and the reporting information of the first object comprises the first domain, the second domain, and the first data volume information field.

As one embodiment, the reporting information of the first object consists of the first domain, the second domain, and the first data volume information field.

As one embodiment, the reporting information of the first object consists of the first domain, the second domain, the first data volume information field and a reserved field.

As one embodiment, the first MAC CE comprises the reporting information of each of the K1 objects, and the reporting information of each of the K1 objects has the same format as the reporting information of the first object.

As one embodiment, if the first domain indicates that the first MAC CE comprises temporal information for the first object, a second signaling set comprises the second domain.

As one embodiment, the first domain, the second domain and the first data volume information field occupy 2 octets.

As one embodiment, it is particularly explained that this example does not limit sizes of the first domain, the second domain and the first data volume information field, and this example does not limit positions of the first domain, the second domain and the first data volume information field, and this example does not limit whether the reporting information of the first object also comprises other fields.

### Embodiment 13

Embodiment 13 illustrates a schematic diagram of reporting information of a first object according to another embodiment of the present application, as shown in FIG. 13. A block 1301 is a second domain, and blocks 1302 and 1303 are first data volume information fields.

In Embodiment 13, the first MAC CE comprises the reporting information of the first object, and the reporting information of the first object comprises the second domain and the first data volume information field.

As one embodiment, the reporting information of the first object consists of the second domain and the first data volume information field.

As one embodiment, the reporting information of the first object consists of the second domain, the first data volume information field and a reserved field.

As one embodiment, the first MAC CE comprises the reporting information of each of the K1 objects, and the reporting information of each of the K1 objects has the same format as the reporting information of the first object.

As one embodiment, a second signaling set comprises the second domain.

As one embodiment, the second domain and the first data volume information field occupy 2 octets.

As one embodiment, it is particularly explained that this example does not limit sizes of the second domain and the first data volume information field, and this example does not limit positions of the second domain and the first data volume information field, and this example does not limit whether the reporting information of the first object also comprises other fields.

### Embodiment 14

Embodiment 14 illustrates a schematic diagram of a format of a first MAC CE according to one embodiment of the present application, as shown in FIG. 14. A dotted-line block 1401 is a first bitmap, and a block 1402 comprises reporting information of a first object.

In Embodiment 14, the first MAC CE comprises the reporting information of at least K1 objects.

As one embodiment, the first MAC CE consists of the first bitmap and the reporting information of the K1 objects.

As one embodiment, the first MAC CE consists of the reporting information of the K1 objects.

As one embodiment, the reporting information of any of the K1 objects comprises at least data volume information.

As one embodiment, the reporting information of any of the K1 objects comprises temporal information, and a second signaling set comprises the temporal information of each of the K1 objects.

As one embodiment, the reporting information of at least one of the K1 objects comprises the temporal information, and the second signaling set comprises the temporal information of each of the at least one object.

As one embodiment, the reporting information of any of the K1 objects does not comprise the temporal information.

As one embodiment, the first object is any of the K1 objects.

As one embodiment, the first object is the first of the K1 objects.

As one embodiment, the first object is one of the K1 objects.

As one embodiment, the reporting information of the first object does not comprise the second domain.

As one embodiment, the reporting information of the first object does not comprise the temporal information of the first object.

As one embodiment, the reporting information of the first object does not comprise a MAC field for indicating the temporal information of the first object.

As one embodiment, the reporting information of the first object comprises the second domain.

As one embodiment, the reporting information of the first object comprises at least the second domain and the first data volume information field.

As one embodiment, the reporting information of the first object comprises at least the second domain, the first data volume information field, and the reserved field.

As one embodiment, the reporting information of the first object comprises at least the first domain, the second domain, the first data volume information field, and the reserved field.

As one embodiment, the reporting information of the first object consists of the second domain and the first data volume information field.

As one embodiment, the reporting information of the first object consists of the second domain, the first data volume information field and a reserved field.

As one embodiment, the reporting information of the first object consists of the first domain, the second domain, the first data volume information field and a reserved field.

As one embodiment, the reporting information of the first object consists of the first data volume information field.

As one embodiment, the reporting information of the first object consists of the first data volume information field and the reserved field.

As one embodiment, the ellipsis between the dotted-line block 1401 and the block 1402 indicates the reporting information of other objects.

As one embodiment, the ellipsis between the dotted-line block 1401 and the block 1402 exists.

As one embodiment, the ellipsis between the dotted-line block 1401 and the block 1402 does not exist.

As one embodiment, the ellipsis after the block 1402 indicates the reporting information of other objects.

As one embodiment, the ellipsis after the block 1402 exists.

As one embodiment, the ellipsis after the block 1402 does not exist.

As one embodiment, the dotted-line block 1401 is optional.

As one embodiment, the dotted-line block 1401 exists.

As one sub-embodiment of this embodiment, it is particularly explained that this example does not limit a size of the first bitmap.

As one sub-embodiment of this embodiment, the first bitmap corresponds to an object #0, an object #1, ..., an object #6, an object #7, respectively.

As one embodiment, the dotted-line block 1401 does not exist.

As one sub-embodiment of this embodiment, the reporting information of the first object comprises an index of the first object.

As one sub-embodiment of this embodiment, the reporting information of the first object comprises the index of the first object and the first data volume information field.

As one sub-embodiment of this embodiment, the reporting information of the first object comprises the index of the first object, the first data volume information field and the reserved field.

As one sub-embodiment of this embodiment, the reporting information of the first object consists of the index of the first object and the first data volume information field.

As one sub-embodiment of this embodiment, the reporting information of the first object consists of the index of the first object, the first data volume information field and the reserved field.

### Embodiment 15

Embodiment 15 illustrates a schematic diagram of a format of the first MAC CE according to another embodiment of the present application, as shown in FIG. 15. The dotted-line block 1501 is a first bitmap, a block 1502 comprises reporting information of a first object, and a block 1503 comprises a second signaling set.

In Embodiment 15, the first MAC CE comprises the reporting information of at least K1 objects and the second signaling set.

As one embodiment, the first MAC CE consists of the first bitmap, the reporting information of the K1 objects and the second signaling set.

As one embodiment, the first MAC CE consists of the reporting information of the K1 objects and the second signaling set.

As one embodiment, the first MAC CE comprises only one piece of temporal information.

As one embodiment, the second signaling set comprises temporal information of only one of the K1 objects.

As one embodiment, the temporal information included in the second signaling set is a minimum value of the temporal information of the K1 objects.

As one embodiment, the temporal information included in the second signaling set is a maximum value of the temporal information of the K1 objects.

As one embodiment, the reporting information of any of the K1 objects does not comprise the temporal information.

As one embodiment, the reporting information of any of the K1 objects comprises data volume information.

As one embodiment, the first object is any of the K1 objects.

As one embodiment, the first object is the first of the K1 objects.

As one embodiment, the first object is one of the K1 objects.

As one embodiment, the reporting information of the first object does not comprise the first domain, and the reporting information of the first object does not comprise the second domain.

As one embodiment, the reporting information of the first object does not comprise the temporal information of the first object.

As one embodiment, the reporting information of the first object does not comprise a MAC field for indicating the temporal information of the first object.

As one embodiment, the reporting information of the first object comprises the first data volume information field.

As one embodiment, the reporting information of the first object comprises the first data volume information field and a reserved field.

As one embodiment, the reporting information of the first object consists of the first data volume information field.

As one embodiment, the reporting information of the first object consists of the first data volume information field and the reserved field.

As one embodiment, the ellipsis between the dotted-line block 1501 and the block 1502 indicates the reporting information of other objects.

As one embodiment, the ellipsis between the dotted-line block 1501 and the block 1502 exists.

As one embodiment, the ellipsis between the dotted-line block 1501 and the block 1502 does not exist.

As one embodiment, the ellipsis between the block 1502 and the block 1503 indicates the reporting information of other objects.

As one embodiment, the ellipsis between the block 1502 and the block 1503 exists.

As one embodiment, the ellipsis between the block 1502 and the block 1503 does not exist.

As one embodiment, the dotted-line block 1501 is optional.

As one embodiment, the dotted-line block 1501 exists.

As one sub-embodiment of this embodiment, it is particularly explained that this example does not limit a size of the first bitmap.

As one sub-embodiment of this embodiment, the first bitmap corresponds to an object #0, an object #1, ..., an object #6, an object #7, respectively.

As one embodiment, the dotted-line block 1501 does not exist.

As one sub-embodiment of this embodiment, the reporting information of the first object comprises an index of the first object.

As one sub-embodiment of this embodiment, the reporting information of the first object comprises the index of the first object and the first data volume information field.

As one sub-embodiment of this embodiment, the reporting information of the first object comprises the index of the first object, the first data volume information field and the reserved field.

As one sub-embodiment of this embodiment, the reporting information of the first object consists of the index of the first object and the first data volume information field.

As one sub-embodiment of this embodiment, the reporting information of the first object consists of the index of the first object, the first data volume information field and the reserved field.

As one sub-embodiment of this embodiment, any of the K1 objects is not the temporal information.

### Embodiment 16

Embodiment 16 illustrates a structural block diagram of a processing device used in a first node according to one embodiment of the present application, as shown in FIG. 16. In FIG. 16, the processing device 1600 in the first node comprises a first receiver 1601 and a first transmitter 1602.

The first transmitter 1602 triggers one first-type buffer status report; after a behavior triggers a first-type buffer status report, sending a first MAC PDU, wherein the first MAC PDU comprises at least a first MAC CE; the first MAC CE indicates K1 pieces of data volume information; the K1 pieces of data volume information are respectively for K1 objects;
in Embodiment 16, first data volume information is one of the K1 pieces of data volume information, the first object is one of the K1 objects, and the first data volume information is for the first object; and the position of the first data volume information in the first MAC CE depends on temporal information of at least one of the K1 objects.

As one embodiment, the first receiver 1601 receives first signaling, the first signaling indicating a first uplink grant, wherein only when the first uplink grant cannot accommodate data volume information of K2 objects, the position of the first data volume information in the first MAC CE depends on the temporal information of the at least one of the K1 objects; the K2 objects have data available, any of the K1 objects belongs to the K2 objects, and K1 is less than K2; and the first MAC PDU is sent on the first uplink grant.

As one embodiment, the first transmitter 1602 executes a logical channel prioritization process before the first MAC PDU is sent, wherein an order of the first MAC CE in the logical channel prioritization process is not lower than an order of a MAC CE for regular BSR in the logical channel prioritization process.

As one embodiment, the first transmitter 1602 cancels a second-type buffer status report in response to the first MAC PDU being sent, wherein the second-type buffer status report is triggered before the first MAC PDU is sent, and the second-type buffer status report comprises at least one of regular BSR, periodic BSR, or padding BSR.

As one embodiment, the first MAC CE comprises a first bitmap, the first bitmap consists of K3 bits, the K3 bits correspond to K3 objects, respectively, and the K3 bits correspond to K3 objects, respectively; and K1 bits among the K3 bits are set as 1, and the K1 bits and the K1 objects are in one-to-one correspondence.

As one embodiment, any bit in the first bitmap corresponds to one index in a first table, the first table comprises Q1 indexes and at most Q1 objects, each of the at most Q1 objects corresponds to one of the Q1 indexes; and each of the at most Q1 objects is one piece of temporal information.

As one embodiment, the first transmitter 1602 sends a second signaling set, the second signaling set comprises temporal information of at least one of the K1 objects.

As one embodiment, the first MAC CE comprises a first domain, and the first domain is used for indicating whether the first MAC CE comprises the temporal information for the first object.

As one embodiment, the first receiver 1601 comprises the antenna 452, the receiving device 454, the multi-antenna receiving processor 458, the receiving processor 456, the controller/processor 459, the memory 460 and the data source 467 in FIG. 4 of the present application.

As one embodiment, the first receiver 1601 comprises the antenna 452, the receiving device 454, the multi-antenna receiving processor 458, and the receiving processor 456 in FIG. 4 of the present application.

As one embodiment, the first receiver 1601 comprises the antenna 452, the receiving device 454, and the receiving processor 456 in FIG. 4 of the present application.

As one embodiment, the first transmitter 1602 comprises the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 1602 comprises the antenna 452, the transmitting device 454, the multi-antenna transmitting processor 457, and the transmitting processor 468 in FIG. 4 of the present application.

As one embodiment, the first transmitter 1602 comprises the antenna 452, the transmitting device 454, and the transmitting processor 468 in FIG. 4 of the present application.

### Embodiment 17

Embodiment 17 illustrates a structural block diagram of a processing device used in a second node according to one embodiment of the present application, as shown in FIG. 17. In FIG. 17, the processing device 1700 in the second node comprises a second transmitter 1701 and a second receiver 1702.

The second receiver 1702 receives a first MAC PDU, the first MAC PDU comprises at least a first MAC CE, the first MAC CE indicates K1 pieces of data volume information, and the K1 pieces of data volume information are respectively for K1 objects;
in Embodiment 17, after one first-type buffer status report is triggered, the first MAC PDU is sent; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects.

As one embodiment, the second transmitter 1701 sends first signaling, and the first signaling indicates a first uplink grant, wherein only when the first uplink grant cannot accommodate data volume information of K2 objects, the position of the first data volume information in the first MAC CE depends on the temporal information of the at least one of the K1 objects; the K2 objects have data available, any of the K1 objects belongs to the K2 objects, and K1 is less than K2; and the first MAC PDU is sent on the first uplink grant.

As one embodiment, before the first MAC PDU is sent, a logical channel prioritization process is executed; and the order of the first MAC CE in the logical channel prioritization process is not lower than the order of the MAC CE for regular BSR in the logical channel prioritization process.

As one embodiment, the second-type buffer status report is cancelled in response to the first MAC PDU being sent; the second-type buffer status report is triggered before the first MAC PDU is sent, and the second-type buffer status report comprises at least one of regular BSR, periodic BSR, or padding BSR.

As one embodiment, the first MAC CE comprises a first bitmap, the first bitmap consists of K3 bits, and the K3 bits correspond to K3 objects, respectively; and K1 bits among the K3 bits are set as 1, and the K1 bits and the K1 objects are in one-to-one correspondence.

As one embodiment, any bit in the first bitmap corresponds to one index in a first table, the first table comprises Q1 indexes and at most Q1 objects, each of the at most Q1 objects corresponds to one of the Q1 indexes; and each of the at most Q1 objects is one piece of temporal information.

As one embodiment, the second receiver 1702 receives a second signaling set, and the second signaling set comprises temporal information of at least one of the K1 objects.

As one embodiment, the first MAC CE comprises a first domain, and the first domain is used for indicating whether the first MAC CE comprises the temporal information for the first object.

As one embodiment, the second transmitter 1701 comprises the antenna 420, the transmitting device 418, the multi-antenna transmitting processor 471, the transmitting processor 416, the controller/processor 475, and the memory 476 in FIG. 4 of the present application.

As one embodiment, the second transmitter 1701 comprises the antenna 420, the transmitting device 418, the multi-antenna transmitting processor 471, and the transmitting processor 416 in FIG. 4 of the present application.

As one embodiment, the second transmitter 1701 comprises the antenna 420, the transmitting device 418, and the transmitting processor 416 in FIG. 4 of the present application.

As one embodiment, the second receiver 1702 comprises the antenna 420, the receiver 418, the multi-antenna receiving processor 472, the receiving processor 470, the controller/processor 475, and the memory 476 in FIG. 4 of the present application.

As one embodiment, the second receiver 1702 comprises the antenna 420, the receiving device 418, the multi-antenna receiving processor 472, and the receiving processor 470 in FIG. 4 of the present application.

As one embodiment, the second receiver 1702 comprises the antenna 420, the receiving device 418, and the receiving processor 470 in FIG. 4 of the present application.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any modifications, equivalent replacements, improvements, etc. made within the spirit and principles of the present application shall be included in the protection scope of the present application.

## Claims

1. A first node used for wireless communication, comprising:
a first transmitter for triggering one first-type buffer status report; and after a behavior triggers the one first-type buffer status report, sending a first MAC PDU, the first MAC PDU comprising at least a first MAC CE, the first MAC CE indicating K1 pieces of data volume information, and the K1 pieces of data volume information being respectively for K1 objects,
wherein first data volume information is one piece of data volume information among the K1 pieces of data volume information, a first object is one of the K1 objects, and the first data volume information is for the first object; and the position of the first data volume information in the first MAC CE depends on temporal information of at least one of the K1 objects.

2. The first node according to claim 1, comprising:
a first receiver for receiving first signaling, the first signaling indicating a first uplink grant,
wherein only when the first uplink grant cannot accommodate data volume information of K2 objects, the position of the first data volume information in the first MAC CE depends on the temporal information of the at least one of the K1 objects; the K2 objects have data available, any of the K1 objects belongs to the K2 objects, and K1 is less than K2; and the first MAC PDU is sent on the first uplink grant.

3. The first node according to claim 1 or 2, comprising:
the first transmitter for executing a logical channel prioritization process before the first MAC PDU is sent,
wherein an order of the first MAC CE in the logical channel prioritization process is not lower than an order of a MAC CE for regular BSR in the logical channel prioritization process.

4. The first node according to any one of claims 1 to 3, comprising:
the first transmitter for cancelling a second-type buffer status report in response to the first MAC PDU being sent,
wherein the second-type buffer status report is triggered before the first MAC PDU is sent, and the second-type buffer status report comprises at least one of regular BSR, periodic BSR, or padding BSR.

5. The first node according to any one of claims 1 to 4, wherein the first MAC CE comprises a first bitmap, the first bitmap consists of K3 bits, and the K3 bits respectively correspond to K3 objects; and K1 bits among the K3 bits are set as 1, and the K1 bits and the K1 objects are in one-to-one correspondence.

6. The first node according to claim 5, wherein any bit in the first bitmap corresponds to one index in a first table, the first table comprises Q1 indexes and at most Q1 objects, and each of the at most Q1 objects corresponds to one of the Q1 indexes; and each of the at most Q1 objects is one piece of temporal information.

7. The first node according to any one of claims 1 to 6, comprising:
the first transmitter for sending a second signaling set, the second signaling set comprising temporal information of at least one of the K1 objects.

8. The first node according to any one of claims 1 to 7, wherein the first MAC CE comprises a first domain, and the first domain is used for indicating whether the first MAC CE comprises temporal information for the first object.

9. A second node used for wireless communication, comprising:
a second receiver for receiving a first MAC PDU, the first MAC PDU comprising at least a first MAC CE, the first MAC CE indicating K1 pieces of data volume information, and the K1 pieces of data volume information being respectively for K1 objects,
wherein after one first-type buffer status report is triggered, the first MAC PDU is sent; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects.

10. A method in a first node used for wireless communication, comprising:
triggering one first-type buffer status report; after a behavior triggers a first-type buffer status report, sending a first MAC PDU, wherein the first MAC PDU comprises at least a first MAC CE; the first MAC CE indicates K1 pieces of data volume information; the K1 pieces of data volume information are respectively for K1 objects;
wherein first data volume information is one piece of data volume information among the K1 pieces of data volume information, a first object is one of the K1 objects, and the first data volume information is for the first object; and the position of the first data volume information in the first MAC CE depends on temporal information of at least one of the K1 objects.

11. A method in a second node used for wireless communication, comprising:
receiving a first MAC PDU, the first MAC PDU comprising at least a first MAC CE, the first MAC CE indicating K1 pieces of data volume information, and the K1 pieces of data volume information being respectively for K1 objects,
wherein after one first-type buffer status report is triggered, the first MAC PDU is sent; first data volume information is a piece of data volume information among the K1 pieces of data volume information; a first object is one of the K1 objects; the first data volume information is for the first object; and the position of the first data volume information in the first MAC CE depends on temporal information of at least one of the K1 objects.
